(19) Europäisches Patentamt
European Patent Office
Office européen des brevets

(11) **EP 3 585 852 B1**

(12) **EUROPÄISCHE PATENTSCHRIFT**

(45) Veröffentlichungstag und Bekanntmachung des Hinweises auf die Patenterteilung:
**30.06.2021 Patentblatt 2021/26**

(21) Anmeldenummer: **18703726.2**

(22) Anmeldetag: **29.01.2018**

(51) Int Cl.:
**C09J 7/38** *(2018.01)*    **C09J 109/02** *(2006.01)*

(86) Internationale Anmeldenummer:
**PCT/EP2018/052137**

(87) Internationale Veröffentlichungsnummer:
**WO 2018/153618 (30.08.2018 Gazette 2018/35)**

(54) **WIEDERABLÖSBARER HAFTKLEBESTREIFEN**

REMOVABLE PRESSURE-SENSITIVE ADHESIVE STRIP

BANDE ADHÉSIVE REPOSITIONNABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2017 DE 102017203092**

(43) Veröffentlichungstag der Anmeldung:
**01.01.2020 Patentblatt 2020/01**

(73) Patentinhaber: **TESA SE**
**22848 Norderstedt (DE)**

(72) Erfinder:
• **VON DEHN, Beatrice**
**22391 Hamburg (DE)**
• **EGGER, Michael**
**22297 Hamburg (DE)**
• **LIM, CaiRong**
**22609 Hamburg (DE)**

(74) Vertreter: **tesa SE**
**Hugo-Kirchberg-Straße 1**
**22848 Norderstedt (DE)**

(56) Entgegenhaltungen:
**WO-A1-2017/025492      DE-A1-102012 223 670**
**DE-A1-102014 208 264    DE-A1-102015 206 076**

**Beschreibung**

Die Erfindung betrifft einen Haftklebestreifen auf der Basis von Acrylnitril-Butadien-Kautschuk, welcher zur Schaffung einer durch dehnende Verstreckung wieder lösbaren Verbindung eingesetzt werden kann.

Elastisch oder plastisch hochdehnbare Haftklebebänder, welche sich durch dehnendes Verstrecken in der Verklebungsebene, d.h. bei einem Abziehwinkel von 0°, rückstands-und zerstörungsfrei wieder ablösen lassen, sind beispielsweise aus der US 4,024,312 A, DE 33 31 016 C2, WO 92/11332 A1, WO 92/11333 A1, DE 42 22 849 C1, WO 95/06691 A1, DE 19531 696 A1, DE 19626 870A1, DE 196 49 727 A1, DE 196 49 728 A1, DE 196 49 729 A1, DE 197 08 364 A1, DE 197 20 145 A1, DE 198 20 858 A1, WO 99/37729 A1 und DE 100 03 318 A1 bekannt und werden nachfolgend auch als strippfähige Haftklebebänder bezeichnet.

Eingesetzt werden solche strippfähigen Haftklebebänder häufig in Form von ein- oder beidseitig haftklebrigen Klebfolienstreifen, die bevorzugt einen nicht haftklebrigen Anfassbereich aufweisen, von welchem aus der Ablöseprozess eingeleitet wird. Besondere Anwendungen entsprechender Haftklebebänder finden sich unter anderem in DE 42 33 872 C1, DE 195 11 288 C1, US 5,507,464 B1, US 5,672,402 B1 und WO 94/21157 A1. Spezielle Ausführungsformen sind auch in der DE 44 28 587 C1, DE 44 31 914 C1, WO 97/07172 A1, DE 196 27 400 A1, WO 98/03601 A1 und DE 196 49 636 A1, DE 197 20 526 A1, DE 197 23 177 A1, DE 197 23 198 A1, DE 197 26 375 A1, DE 197 56 084 C1, DE 197 56 816 A1, DE 198 42 864 A1, DE 198 42 865 A1, WO 99/31193A1, WO 99/37729 A1, WO 99/63018 A1, WO 00/12644 A1 und DE 199 38 693 A1 beschrieben. Bevorzugte Einsatzgebiete vorgenannter strippfähiger Klebfolienstreifen beinhalten insbesondere die rückstands- und zerstörungsfrei wieder ablösbare Fixierung leichter bis mittelschwerer Gegenstände im Wohn-, Arbeits- und Bürobereich. Für den Einsatz im Wohn- und Bürobereich werden im Allgemeinen recht dicke Produkte von über 400 $\mu$m eingesetzt. In der Consumer-Elektronik-Industrie wie zum Beispiel bei der Herstellung von Mobiltelefonen, Digitalkameras oder Laptops wird der Wunsch nach einer Möglichkeit, die einzelnen Bauteile nach der Nutzung bei der Entsorgung zu trennen, immer größer. Dann können einige Bauteile wiederverwendet oder aufbereitet werden. Oder es ist zumindest eine getrennte Entsorgung ermöglicht. Daher sind wiederlösbare Klebeverbindungen in dieser Industrie von großem Interesse. Insbesondere Klebebänder, die eine hohe Halteleistung besitzen und auf Wunsch leicht entfernt werden können, bilden hier eine sinnvolle Alternative zu Klebestreifen, die zum Ablösen erst vorbehandelt werden müssen, indem sie zum Beispiel erhitzt werden. Im Bereich der Consumer-Elektronik sind Klebestreifen bevorzugt, die möglichst dünn sind, da die Endgeräte möglichst dünn sein und daher auch alle einzelnen Komponenten wenig Platz beanspruchen sollen.

Beim Einsatz von sehr dünnen strippfähigen Klebestreifen, die ohne Träger auskommen, kommt es vermehrt zu Reißern (siehe DE 33 31 016 C2). Wenn die Klebestreifen reißen, ist ein Ablösen in der Regel allerdings nicht mehr möglich, weil der Rest des Klebestreifens in die Klebefuge zurückschnellt und somit kein Anfasser zur Verfügung steht.

Die WO 92/11333 A1 beschreibt ein strippfähiges Klebeband, welches als Träger eine hochverstreckbare Folie nutzt, die nach Verstreckung ein Rückstellvermögen von < 50 % aufweist.

Die WO 92/11332 A1 beschreibt einen durch Ziehen in der Verklebungsebene wiederablösbaren Klebfolienstreifen, für welchen als Träger eine hochverstreckbare, im Wesentlichen nicht rückstellende Folie genutzt werden kann. Als Klebemassen kommen ausschließlich UV-vernetzte Acrylatcopolymere zum Einsatz, mit denen nicht die hohen Verklebungsfestigkeiten erreicht werden können und die weniger stark an Klebkraft während der Dehnung verlieren als dieses zum Beispiel bei Klebemassen auf Vinylaromatenblockcopolymerbasis der Fall ist.

Weitere Veröffentlichungen wie die WO 2010/141248 A1 beschreiben Systeme mit Polyisobutylenhaftklebemassen, die ebenfalls eine geringe Klebkraft aufweisen.

Ein strippfähiger Klebfolienstreifen mit einem geschäumten, nicht haftklebrigen Folienträger wird in WO 95/06691 A1, DE 196 49 727 A1, DE 196 49 728 A1, DE 196 49 729 A1 und DE 198 20 858 A1 beschrieben. Durch den Schaumstoffzwischenträger ist eine geringe Dicke des Klebfolienstreifens von unter 200 $\mu$m nicht möglich.

Geschäumte Haftklebemassensysteme sind seit längerem bekannt und im Stand der Technik beschrieben. Grundsätzlich lassen sich Polymerschäume auf zwei Wegen herstellen. Zum einen durch die Einwirkung eines Treibgases, sei es als solches zugesetzt oder aus einer chemischen Reaktion resultierend, zum anderen durch die Einarbeitung von Hohlkügelchen in die Werkstoffmatrix. Schäume, die auf letzterem Wege hergestellt wurden, werden als syntaktische Schäume bezeichnet.

Mit Mikrohohlkugeln geschäumte Massen zeichnen sich durch eine definierte Zellstruktur mit einer gleichmäßigen Größenverteilung der Schaumzellen aus. Mit Mikrohohlkugeln werden geschlossenzellige Schäume ohne Kavitäten erhalten, die sich im Vergleich zu offenzelligen Varianten unter anderem durch eine bessere Abdichtungswirkung gegen Staub und flüssige Medien auszeichnen. Darüber hinaus sind chemisch oder physikalisch geschäumte Materialien anfälliger für ein irreversibles Zusammenfallen unter Druck und Temperatur und zeigen häufig eine niedrigere Kohäsionsfestigkeit. Besonders vorteilhafte Eigenschaften lassen sich erzielen, wenn als Mikrokugeln zur Schäumung expandierbare Mikrokugeln (auch als "Mikroballons" bezeichnet) eingesetzt werden. Durch ihre flexible, thermoplastische Polymerschale besitzen derartige Schäume eine höhere Anpassungsfähigkeit als solche, die mit nicht expandierbaren, nicht polymeren Mikrohohlkugeln (beispielsweise Glashohlkugeln) gefüllt sind. Sie eignen sich besser zum Ausgleich von Fertigungstoleranzen, wie sie zum Beispiel bei Spritzgussteilen die Regel sind, und können aufgrund ihres Schaumcharakters auch thermische Spannungen besser kompensieren. Des Weiteren können durch die Auswahl des thermoplastischen Harzes der Polymerschale die mechanischen Eigenschaften des Schaums weiter beeinflusst werden. So ist es beispielsweise möglich, selbst dann, wenn der Schaum eine geringere Dichte als die Matrix aufweist, Schäume mit höherer Kohäsionsfestigkeit als mit der Polymermatrix allein herzustellen. So können typische Schaumeigenschaften wie die Anpassungsfähigkeit an raue Untergründe mit einer hohen Kohäsionsfestigkeit für haftklebende Schäume kombiniert werden.

In der EP 0 257 984 A1 werden Klebebänder offenbart, die zumindest einseitig eine geschäumte Klebebeschichtung aufweisen. In dieser Klebebeschichtung sind Polymerkügelchen enthalten, die ihrerseits eine Flüssigkeit aus Kohlenwasserstoffen enthalten und bei erhöhten Temperaturen expandieren. Die Gerüstpolymere der Haftklebemassen können aus Kautschuken oder Polyacrylaten bestehen. Die Mikroballons werden hier entweder vor oder nach der Polymerisation zugesetzt. Die Mikroballons enthaltenen Haftklebemassen werden aus Lösemittel verarbeitet und zu Klebebändern ausgeformt. Der Schritt der Schäumung erfolgt dabei konsequent nach der Beschichtung. So werden mikroraue Oberflächen erhalten. Daraus resultieren Eigenschaften wie insbesondere Repositionierbarkeit. Der Effekt der besseren Repositionierbarkeit durch mikroraue Oberflächen von mit Mikroballon geschäumten Haftklebemassen wird auch in weiteren Schriften wie DE 35 37 433 A1 oder WO 95/31225 A1 beschrieben. Die mikroraue Oberfläche wird verwendet, um eine blasenfreie Verklebung zu erzeugen. Diese Verwendung offenbaren auch die EP 0 693 097 A1 und die WO 98/18878 A1. Mit Mikroballons geschäumte Haftklebemassen sind auch aus den Schriften US 4,885,170 A und EP 1 102 809 B bekannt, hier werden sie aber als Füllstoff für Klebebänder zur permanenten Verklebung eingesetzt, welche nicht wieder ablösbar sind.

Zu den Geräten in der Consumer-Elektronik-Industrie zählen elektronische, optische und feinmechanische Geräte, im Sinne dieser Anmeldung insbesondere solche Geräte, wie sie in Klasse 9 der Internationalen Klassifikation von Waren und Dienstleistungen für die Eintragung von Marken (Klassifikation von Nizza), 10. Ausgabe (NCL(10-2013)), einzuordnen sind, sofern es sich dabei um elektronische, optische oder feinmechanische Geräte handelt, weiterhin Uhren und Zeitmessgeräte gemäß Klasse 14 (NCL(10-2013)), wie insbesondere

- Wissenschaftliche, Schifffahrts-, Vermessungs-, fotografische, Film-, optische, Wäge-, Mess-, Signal-, Kontroll-, Rettungs- und Unterrichtsapparate und - instrumente;
- Apparate und Instrumente zum Leiten, Schalten, Umwandeln, Speichern, Regeln und Kontrollieren von Elektrizität;
- Bildaufzeichnungs-, -verarbeitungs-, -übertragungs- und -wiedergabegeräte, wie beispielweise Fernseher und dergleichen
- Akustische Aufzeichnungs-, Verarbeitungs-, -übertragungs- und - wiedergabegeräte, wie beispielsweise Rundfunkgeräte und dergleichen
- Computer, Rechengeräte und Datenverarbeitungsgeräte, mathematische Geräte und Instrumente, Computerzubehör, Bürogeräte - wie beispielsweise Drucker, Faxgeräte, Kopiergeräte, Schreibmaschinen -, Datenspeichergeräte
- Fernkommunikations- und Multifunktionsgeräte mit Fernkommunikationsfunktion, wie beispielsweise Telefone, Anrufbeantworter
- Chemische und physikalische Messgeräte, Steuergeräte und Instrumente, wie beispielweise Akkumulatorladegeräte, Multimeter, Lampen, Tachometer
- Nautische Geräte und Instrumente
- Optische Geräte und Instrumente
- Medizinische Geräte und Instrumente und solche für Sportler
- Uhren und Chronometer
- Solarzellenmodule, wie etwa elektrochemische Farbstoff-Solarzellen, organische Solarzellen, Dünnschichtzellen,
- Feuerlöschgeräte.

Die technische Entwicklung richtet sich vermehrt auf solche Geräte, die immer kleiner und leichter gestaltet werden, damit sie von ihrem Besitzer jederzeit mitgeführt werden können und üblicherweise regelmäßig mitgeführt werden. Dies geschieht üblicherweise durch Realisierung geringer Gewichte und/oder geeigneter Größe derartiger Geräte. Solche Geräte werden im Rahmen dieser Schrift auch als Mobilgeräte oder portable Geräte bezeichnet. Bei diesem Entwicklungstrend werden feinmechanische und optische Geräte zunehmend (auch) mit elektronischen Komponenten versehen, was die Möglichkeiten der Minimierung erhöht. Aufgrund des Mitführens der Mobilgeräte sind diese vermehrten - insbesondere mechanischen - Belastungen ausgesetzt, etwa durch Anstoßen an Kanten, durch Fallenlassen, durch Kontakt mit anderen harten Objekten in der Tasche, aber auch schon durch die permanente Bewegung durch das Mitführen an sich. Mobilgeräte sind aber auch stärkeren Belastungen aufgrund von Feuchtigkeitseinwirkungen, Temperatureinflüssen und dergleichen ausgesetzt als solche "immobilen" Geräte, die üblicherweise in Innenräumen installiert sind und nicht oder kaum bewegt werden.

Die Erfindung bezieht sich dementsprechend besonders bevorzugt auf Mobilgeräte, da der erfindungsgemäß eingesetzte Haftklebestreifen hier aufgrund seiner unerwartet guten Eigenschaften (sehr hohe Schockresistenz, geringe Anfälligkeit für Reißen beim dehnenden Verstrecken, d.h. geringe Reißeranfälligkeit) einen besonderen Nutzen hat. Nachfolgend sind einige portable Geräte aufgeführt, ohne sich durch die konkret genannten Vertreter in dieser Liste bezüglich des Gegenstands der Erfindung unnötig beschränken zu wollen.

- Fotoapparate, Digitalkameras, Fotografie-Zubehörgeräte (wie Belichtungsmesser, Blitzlichtgeräte, Blenden, Fotogehäuse, Objektive etc.), Filmkameras, Videokameras
- Kleincomputer (Mobilcomputer, Taschencomputer, Taschenrechner), Laptops, Notebooks, Netbooks, Ultrabooks, Tablet-Computer, Handhelds, elektronische Terminkalender und Organisatoren (sogenannte "Electronic Organizer" oder "Personal Digital Assistants", PDA, Palmtops), Modems,
- Computer-Zubehörgeräte und Bedieneinheiten für elektronische Geräte, wie Mäuse, Zeichenpads, Grafiktabletts, Mikrophone, Lautsprecher, Spielkonsolen, Gamepads, Fernsteuerungen, Fernbedienungen, Tastfelder ("Touchpads")
- Monitore, Displays, Bildschirme, berührungsempfindliche Bildschirme (Sensorbildschirme, "Touchscreen-Geräte"), Beamer
- Lesegeräte für elektronische Bücher ("E-Books"),
- Kleinfernsehgeräte, Taschenfernseher, Filmabspielgeräte, Videoabspielgeräte
- Radios (auch Klein- und Taschenrundfunkgeräte), Walkmen, Discmen, Musikabspielgeräte für z.B. CD, DVD, Blueray, Kassetten, USB, MP3, Kopfhörer
- Schnurlose Telefone, Mobiltelefone, Smartphones, Funksprechgeräte, Freisprechgeräte, Personenrufgeräte (Pager, Pieper)
- Mobile Defibrilatoren, Blutzuckermessgeräte, Blutdruckmessgeräte, Schrittzähler, Pulsmesser
- Taschenlampen, Laserpointer
- Mobile Detektoren, optische Vergrößerungsgeräte, Fernsichtgeräte, Nachtsichtgeräte
- GPS-Geräte, Navigationsgeräte, tragbare Schnittstellengeräte der Satellitenkommunikation
- Datenspeichergeräte (USB-Sticks, externe Festplatten, Speicherkarten)
- Armbanduhren, Digitaluhren, Taschenuhren, Kettenuhren, Stoppuhren.

Für diese Geräte sind insbesondere Klebebänder gefordert, die auf Wunsch leicht entfernt werden können. Des Weiteren ist es wichtig, dass die Klebebänder in ihrer Halteleistung nicht versagen, insbesondere wenn das elektronische Gerät, zum Beispiel ein Handy, fallengelassen wird und auf den Untergrund aufprallt. Der Klebestreifen muss also eine hohe Schockresistenz aufweisen. Die DE 10 2015 206 076 A1 beschreibt einen solchen Haftklebestreifen mit reduzierter Ablösekraft und hoher Schockresistenz, der sich durch dehnendes Verstrecken im Wesentlichen in der Verklebungsebene rückstands- und zerstörungsfrei wieder ablösen lässt, aus einer oder mehreren Klebemassenschichten, die allesamt aus einer Haftklebemasse bestehen, die mit Mikroballons geschäumt ist und insbesondere auf Basis von Vinylaromatenblockcopolymeren und Klebharzen aufgebaut ist, und gegebenenfalls aus einer oder mehreren Zwischenträgerschichten, wobei der Haftklebestreifen ausschließlich aus den genannten Klebemassenschichten und gegebenenfalls vorhandenen Zwischenträgerschichten besteht und wobei eine äußere obere und eine äußere untere Fläche des Haftklebestreifens von der oder den genannten Klebemassenschichten gebildet werden.

Die DE 10 2012 223 670 A1 betrifft einen Haftklebfolienstreifen aus mindestens zwei, insbesondere drei Schichten, der sich durch dehnendes Verstrecken im Wesentlichen in der Verklebungsebene rückstands- und zerstörungsfrei wieder ablösen lässt, mit einem Träger, auf dem zumindest einseitig eine erste, außenliegende Klebemassenschicht vorhanden ist, wobei die Klebemassenschicht aus einer Klebmasse besteht, die auf Basis von Vinylaromatenblockcopolymeren und Klebharzen aufgebaut ist, wobei zu mindestens 75 % (bezogen auf den Gesamtharzanteil) ein Harz gewählt wird mit einem DACP (diacetone alcohol cloud point) von größer -20 °C, bevorzugt größer 0 °C, und der Träger mindestens eine Schicht aufweist, die aus einem Polyurethan besteht mit einer Reißdehnung von mindestens 100 % und einem Rückstellvermögen von über 50 %. Der Träger ist somit hoch dehnbar und zum großen Teil elastisch. Ferner können weite Teile des Klebharzes nicht aus der Klebschicht in den Träger hinein wandern, was sich positiv auf die Halteleistung auswirkt.

Die DE 10 2015 215 247 A1 betrifft eine Haftklebemasse, die als Basispolymer mindestens einen oder mehrere feste Acrylnitril-Butadien-Kautschuke sowie Klebharze enthält, wobei der Anteil der Klebharze bei 30 bis 130 phr liegt, dadurch gekennzeichnet, dass der Acrylnitril-Gehalt in dem oder den festen Acrylnitril-Butadien-Kautschuk(en) zwischen 10 und 30 Gew.-% liegt. Die Haftklebemasse ist kostenreduziert und verliert auch nach längerer Lagerung in verschiedenen Medien keine Klebkraft.

Die DE 10 2014 208264 A1 betrifft die Verwendung eines Hilfsklebebandes als Ablösehilfe zum Ablösen einer dehnbaren beiderseitig klebenden Klebefolie, die durch dehnendes Verstrecken in der Verklebungsebene rückstands- und zerstörungsfrei wiederablösbar ist, die mindestens ein Ende aufweist, das als Anfasser ausgebildet ist, und mittels derer ein Gegenstand befestigt ist, durch Ziehen am Anfasser in einem Ablösewinkel > 45° um eine Kante des befestigten Gegenstandes, wobei das Hilfsklebeband um diese Kante geklebt wird und das Hilfsklebeband ein einseitiges Klebeband mit einem Träger ist, wobei der Träger mindestens eine der beiden Eigenschaften

a) der Träger besteht aus einem niederenergetischen Polymer,
b) der Träger weist eine strukturierte Oberfläche auf erfüllt.

Die stripfähigen Haftklebebänder aus dem Stand der Technik weisen jedoch das Problem auf, dass sie insbesondere beim Abziehen in einem Winkel von mehr als 45° gegenüber der Verklebungsebene, wie zum Beispiel 90° gegenüber der Verklebungsebene, häufig reißen. Ein Ablösen ist dann in der Regel nicht mehr möglich, weil der Rest des Klebestreifens in die Klebefuge zurückschnellt und somit kein Anfasser mehr zur Verfügung steht. Dies ist beispielsweise bei den üblicherweise eingesetzten Klebmassen auf Vinylaromatenblockcopolymerbasis selbst dann der Fall, wenn diese im Verbund mit Polyurethanträgern eingesetzt werden, auf die sie beschichtet worden sind. Insbesondere in Mobilgeräten wie z.B. Mobiltelefonen besteht jedoch beim Abziehen der stripfähigen Haftklebebänder immer weniger Platz, so dass Bedarf besteht an stripfähigen Haftklebebändern, die auch in einem Winkel von mehr als 45°, wie zum Beispiel 90°, gegenüber der Verklebungsebene abgezogen werden können, ohne zu reißen. Als Beispiel wird die Verwendung solcher stripfähigen Haftklebebänder beim Battery Mounting genannt. Ferner besteht ein Bedarf an stripfähigen Haftklebebändern, deren Schockresistenz weiter verbessert ist.

Aufgabe der vorliegenden Erfindung ist es daher, einen Haftklebestreifen bereitzustellen, der sich durch dehnendes Verstrecken, d.h. Ziehen, in einem Winkel von mehr als 45°, wie zum Beispiel von 90°, gegenüber der Verklebungsebene rückstands- und zerstörungsfrei wieder ablösen lässt. Insbesondere soll die Reißeranfälligkeit, d.h. die Häufigkeit des Abreißens des Klebestreifens, beim dehnenden Verstrecken in einem Winkel von mehr als 45°, wie zum Beispiel von 90°, gegenüber der Verklebungsebene reduziert werden. Der Haftklebestreifen soll ferner üblicherweise eine verbesserte Schockresistenz aufweisen.

Die Aufgabe wird durch einen Haftklebestreifen gemäß Anspruch 1 der vorliegenden Erfindung gelöst, d.h. durch einen Haftklebestreifen umfassend einen Träger und eine Haftklebemassenschicht HS1, die auf einer der Oberflächen des Trägers angeordnet ist, wobei

(i) der Träger in der Längsrichtung und/oder der Querrichtung, insbesondere in der Längsrichtung und der Querrichtung, eine Reißdehnung von mindestens 250 % aufweist und

(ii) die Haftklebemassenschicht HS1 aus einer Haftklebemasse besteht, die als Basispolymer mindestens einen festen Acrylnitril-Butadien-Kautschuk enthält und ferner mindestens ein Klebharz enthält, wobei der Anteil an Klebharz bei insgesamt 30 bis 130 phr liegt.

Überraschenderweise wurde gefunden, dass im erfindungsgemäßen Haftklebestreifen die Kombination einer Haftklebemassenschicht auf Basis von festem Acrylnitril-Butadien-Kautschuk mit einem dehnbaren Träger, d.h. einem Träger mit einer Reißdehnung zumindest in der Abziehrichtung - wobei es sich um die Längsrichtung und/oder die Querrichtung des Trägers handeln kann - von mindestens 250%, zu einer reduzierten Reißeranfälligkeit beim dehnenden Verstrecken führt, insbesondere beim dehnenden Verstrecken in einem Winkel von mehr als 45°, wie zum Beispiel von 90°, gegenüber der Verklebungsebene. Der erfindungsgemäße Haftklebestreifen lässt sich durch dehnendes Verstrecken in unterschiedlichen Winkeln gegenüber der Verklebungsebene rückstands- und zerstörungsfrei wieder ablösen, insbesondere mit einer allenfalls geringen Reißeranfälligkeit. Denkbare Winkel sind beispielsweise 0°, d.h. im Wesentlichen in der Verklebungsebene, oder mehr als 45°, wie zum Beispiel 90°, gegenüber der Verklebungsebene. Der Haftklebestreifen lässt sich beim dehnenden Verstrecken in unterschiedlichen Winkeln, wie z.B. 0° oder mehr als 45°, außerdem leicht und rückstandsfrei wieder ablösen, offensichtlich sinkt also die Klebrigkeit des erfindungsgemäßen Haftklebestreifens beim dehnenden Verstrecken deutlich ab. Ferner führt die genannte Kombination zu einer verbesserten Schockresistenz des resultierenden Haftklebestreifens, typischerweise sowohl in der x,y-Ebene, auch Querschlagzähigkeit genannt, als auch in der z-Ebene, auch Durchschlagzähigkeit genannt. Darüber hinaus weisen die erfindungsgemäßen Haftklebestreifen typischerweise hohe Klebkräfte auf.

Gegenstand der Unteransprüche sind dabei vorteilhafte Ausführungsformen des Haftklebestreifens.

Flüssige Kautschuke zeichnen sich gegenüber festen Kautschuken dadurch aus, dass sie einen Erweichungspunkt $T_E$ von weniger als 40 °C aufweisen. Feste Kautschuke sind somit dadurch gekennzeichnet, dass sie keinen Erweichungspunkt $T_E$ von weniger als 40 °C aufweisen. Die Angaben zum Erweichungspunkt $T_E$ von oligomeren Verbindungen, polymeren Verbindungen bzw. Harzen, beziehen sich auf das Ring-Kugel-Verfahren gemäß DIN EN 1427:2007 bei entsprechender Anwendung der Bestimmungen (Untersuchung der Oligomer-, Polymer- bzw. Harzprobe statt Bitumens bei ansonsten beibehaltener Verfahrensführung); die Messungen erfolgen im Glycerolbad.

Wenn in der Haftklebemasseschicht HS1 der Anteil an Klebharz bei insgesamt 30 bis 130 phr liegt, ist die Haftklebemasseschicht insbesondere gleichzeitig durch gute Adhäsions- und Kohäsionswerte gekennzeichnet.

Unter der Bezeichnung "Klebharz", englisch "Tackifier Resins", versteht der Fachmann einen Stoff auf Harzbasis, der die Klebrigkeit erhöht. Im Rahmen der vorliegenden Anmeldung gelten Klebharze nicht als Polymere.

Die in der vorliegenden Anmeldung gemachten Angaben in phr (engl. "parts per hundred rubber") bedeuten jeweils Gewichtsteile der betreffenden Komponente bezogen auf 100 Gewichtsteile aller festen Kautschukkomponenten der Haftklebemasse, also beispielsweise ohne Berücksichtigung von Klebharz oder flüssigem Kautschuk. Vorzugsweise ist im erfindungsgemäßen Haftklebestreifen auf der der Haftklebemassenschicht HS1 gegenüberliegenden Oberfläche des Trägers eine Haftklebemassenschicht HS2 angeordnet. Die Haftklebemassenschicht HS2 besteht vorzugsweise wie bereits die Haftklebemassenschicht HS1 ebenfalls aus einer Haftklebemasse, die als Basispolymer mindestens einen festen Acrylnitril-Butadien-Kautschuk enthält und ferner mindestens ein Klebharz enthält, wobei der Anteil an Klebharz bei insgesamt 30 bis 130 phr liegt. Besonders bevorzugt weisen die Haftklebemassenschichten HS1 und HS2 eine identische Zusammensetzung auf.

Unter der "Anordnung" einer Haftklebemassenschicht HS1 oder HS2 auf einer der Oberflächen eines Trägers kann in der vorliegenden Anmeldung eine solche Anordnung gemeint sein, bei der die jeweilige Haftklebemasseschicht in direktem Kontakt mit der Oberfläche des Trägers steht, d.h. direkt auf der Oberfläche angeordnet ist. Alternativ kann damit auch eine solche Anordnung gemeint sein, bei der zwischen der Haftklebemassenschicht HS1 oder HS2 und der Oberfläche des Trägers mindestens eine weitere Schicht vorliegt, die der rückstands- und zerstörungsfreien Ablösbarkeit des Haftklebestreifens durch dehnendes Verstrecken, insbesondere in einem Winkel von mehr als 45° gegenüber der Verklebungsebene, nicht entgegen steht. Vorzugsweise stehen im erfindungsgemäßen Haftklebestreifen die Haftklebemassenschichten HS1 und/oder HS2, und insbesondere die Haftklebemassenschichten HS1 und HS2, in direktem Kontakt mit jeweils einer der beiden Oberflächen des Trägers.

Vorzugsweise sind im erfindungsgemäßen Haftklebestreifen die Haftklebemassenschichten HS1 und/oder HS2, insbesondere die Haftklebemassenschichten HS1 und HS2, außenliegende Haftklebemassenschichten. Das heißt, der Haftklebestreifen weist bevorzugt eine obere äußere und eine untere äußere Fläche auf, wobei weder auf der oberen äußeren noch auf der unteren äußeren Fläche eine oder mehrere weitere Schichten, insbesondere keine anderen Klebemassenschichten, vorhanden sind, die Bestandteil des Haftklebestreifens sind. Der Haftklebestreifen kann bis zur Verwendung ein- oder beidseitig mit einem Liner eingedeckt sein. Ein Liner (Trennpapier, Trennfolie) ist gemäß der vorliegenden Anmeldung nicht Bestandteil eines Haftklebestreifens, sondern nur ein Hilfsmittel zu dessen Herstellung, Lagerung oder für die Weiterverarbeitung durch Stanzen. Darüber hinaus ist ein Liner im Gegensatz zu dem im erfindungsgemäßen Haftklebestreifen enthaltenen Träger mit einer Reißdehnung von mindestens 250 % nicht fest mit einer Klebstoffschicht verbunden.

Bevorzugt stellen die Haftklebemassenschicht HS1 auf Basis von festem Acrylnitril-Butadien-Kautschuk und, falls im erfindungsgemäßen Haftklebestreifen vorhanden, die Haftklebemassenschicht HS2 auf Basis von festem Acrylnitril-Butadien-Kautschuk außenliegende Haftklebemassenschichten dar. In einem solchen Haftklebestreifen kann der erfindungsgemäß festgestellte Vorteil der hohen Schockresistenz, typischerweise sowohl in der x,y-Ebene als auch in der z-Ebene, besonders gut verwirklicht werden.

Im Rahmen der vorliegenden Anmeldung ist mit einer Haftklebemassenschicht auf Basis von festem Acrylnitril-Butadien-Kautschuk eine Haftklebmassenschicht gemeint, die aus einer Haftklebemasse besteht, die als Basispolymer mindestens einen festen Acrylnitril-Butadien-Kautschuk enthält und ferner mindestens ein Klebharz enthält, wobei der Anteil an Klebharz bei insgesamt 30 bis 130 phr liegt. Ferner ist mit einer Haftklebemasse auf Basis von festem Acrylnitril-Butadien-Kautschuk eine Haftklebmasse gemeint, die als Basispolymer mindestens einen festen Acrylnitril-Butadien-Kautschuk enthält und ferner mindestens ein Klebharz enthält, wobei der Anteil an Klebharz bei insgesamt 30 bis 130 phr liegt.

In einer besonders bevorzugten Ausführungsform besteht der erfindungsgemäße Haftklebestreifen ausschließlich aus einem Träger mit einer Reißdehnung in der Längsrichtung und/oder der Querrichtung, insbesondere in der Längsrichtung und der Querrichtung, von mindestens 250 % und

einer Haftklebemassenschicht HS1, die auf einer der Oberflächen des Trägers angeordnet ist und aus einer Haftklebemasse besteht, die als Basispolymer mindestens einen festen Acrylnitril-Butadien-Kautschuk enthält und ferner mindestens ein Klebharz enthält, wobei der Anteil an Klebharz bei insgesamt 30 bis 130 phr liegt, und gegebenenfalls ferner einer Haftklebemassenschicht HS2, die auf der der Haftklebemassenschicht HS1 gegenüberliegenden Oberfläche des Trägers angeordnet ist und die ebenfalls aus einer Haftklebemasse besteht, die als Basispolymer mindestens einen festen Acrylnitril-Butadien-Kautschuk enthält und ferner mindestens ein Klebharz enthält, wobei der Anteil an Klebharz bei insgesamt 30 bis 130 phr liegt.

Diese einseitigen und doppelseitigen Klebebänder sind durch allenfalls geringe Reißeranfälligkeiten auch beim Abziehen in einem Winkel von mehr als 45° gegenüber der Verklebungsebene gekennzeichnet und weisen ferner hervorragende Schockresistenzen, d.h. Querschlagzähigkeiten und Durchschlagzähigkeiten, auf. Insbesondere bevorzugt ist dabei das doppelseitige Klebeband wie vorstehend beschrieben. Als Klebebänder im Sinne der vorliegenden Anmeldung sollen ein- oder beidseitig mit Klebmasse beschichtete flächige oder bandförmige Trägergebilde verstanden werden, also neben klassischen Bändern auch Etiketten, Abschnitte, Stanzlinge (gestanzte mit Klebemasse beschichtete flächige Trägergebilde), zweidimensional ausgedehnte Gebilde (zum Beispiel Folien) und dergleichen, auch Mehrschichtanordnungen.

Vorzugsweise beträgt der Acrylnitrilgehalt in dem festen Acrylnitril-Butadien-Kautschuk der Haftklebemassenschicht HS1 und/oder HS2 zwischen 10 und 45 Gew.-%, bevorzugter zwischen 10 und 30 Gew.-%, noch bevorzugter zwischen 10 und 25 Gew.-%, und insbesondere zwischen 15 und 20 Gew.-%. In diesen Bereichen lassen sich besonders geringe Reißeranfälligkeiten und besonders hohe Schockresistenzen erzielen. Der Anteil an festem Acrylnitril-Butadien-Kautschuk in der Haftklebemasse auf Basis von festem Acrylnitril-Butadien-Kautschuk der Haftklebemassenschicht HS1 und/oder HS2 beträgt insgesamt vorzugsweise mindestens 50 Gew.-%, bezogen auf das Gesamtgewicht der Haftklebemasse.

Vorzugsweise kann in der Haftklebemasse auf Basis von festem Acrylnitril-Butadien-Kautschuk der Haftklebemassenschicht HS1 und/oder HS2 des erfindungsgemäßen Haftklebestreifens als weiteres Basispolymer mindestens ein flüssiger Acrylnitril-Butadien-Kautschuk enthalten sein, wobei der Acrylnitrilgehalt in dem mindestens einen flüssigen Acrylnitril-Butadien-Kautschuk vorzugsweise zwischen 10 und 45 Gew.-% liegt, bevorzugter zwischen 10 und 30 Gew.-%, noch bevorzugter zwischen 10 und 25 Gew.-%, und insbesondere zwischen 15 und 20 Gew.-%. Der Anteil an flüssigem Acrylnitril-Butadien-Kautschuk in der Haftklebemasse auf Basis von festem Acrylnitril-Butadien-Kautschuk der Haftklebemassenschicht HS1 und/oder HS2 beträgt insgesamt vorzugsweise bis zu 20 Gew.-%, bevorzugter zwischen 1 und 15 Gew.-%, und insbesondere zwischen 2 und 10 Gew.-%, jeweils bezogen auf das Gesamtgewicht der Haftklebemasse.

Vorzugsweise besteht in der Haftklebemasse auf Basis von festem Acrylnitril-Butadien-Kautschuk der Haftklebemassenschicht HS1 und/oder HS2 das Basispolymer aus festem Acrylnitril-Butadien-Kautschuk oder aus flüssigem und festem Acrylnitril-Butadien-Kautschuk, wobei bevorzugter in der Haftklebemasse neben dem Acrylnitril-Butadien-Kautschuk kein weiteres Polymer vorhanden ist. Alternativ enthält das Basispolymer zu mehr als 90 Gew.-%, vorzugsweise mehr als 95 Gew.-% festen und gegebenenfalls flüssigen Acrylnitril-Butadien-Kautschuk.

In einer weiteren bevorzugten Ausführungsform ist in der Haftklebemasse auf Basis von festem Acrylnitril-Butadien-Kautschuk der Haftklebemassenschicht HS1 und/oder HS2 des erfindungsgemäßen Haftklebestreifens ein Blend von mindestens drei synthetischen Nitrilkautschuken S1, S2 und S3 enthalten, wobei

(a) der Blend mikrophasensepariert ist, gekennzeichnet durch mindestens drei unterschiedliche Glasübergangstemperaturen im DSC,

(b) mindestens eine Glasübergangstemperatur größer als 10 °C ist und eine Glasübergangstemperatur kleiner als -20 °C ist,

(c) der oder die Nitrilkautschuke S1 einen Acrylnitrilanteil von größer/gleich 35 Gew.-% aufweisen,

(d) der oder die Nitrilkautschuke S2 einen Acrylnitrilanteil von größer 25 Gew.-% und kleiner 35 Gew.-% aufweisen, und

(e) der oder die Nitrilkautschuke S3 einen Acrylnitrilanteil von kleiner/gleich 25 Gew.-% aufweisen.

Durch die Domäne mit der geringen Glasübergangstemperatur werden die Kälteschlagfestigkeit und die Adhäsion bei geringen Temperaturen erhöht, durch die Domäne mit der hohen Glasübergangstemperatur werden die Verklebungsfestigkeit bei hohen Temperaturen und die Dimensionsstabilität der Stanzlinge unter Druck und unter Temperatur erhalten.

In der Haftklebemassenschicht HS1 und/oder HS2, die einen solchen Blend von mindestens drei synthetischen Nitrilkautschuken S1, S2 und S3 enthält, beträgt der Gewichtsanteil des oder der Nitrilkautschuke S1 vorzugsweise zwischen 5 und 50 Gew.-% bezogen auf den Gesamtnitrilkautschukanteil, beträgt der Gewichtsanteil des oder der Nitrilkautschuke S2 vorzugsweise zwischen 10 und 90 Gew-% bezogen auf den Gesamtnitrilkautschukanteil, und beträgt der Gewichtsanteil des oder der Nitrilkautschuke S3 vorzugsweise zwischen 5 und 50 Gew.-% bezogen auf den Gesamtnitrilkautschukanteil.

Nitrilkautschuke S1

Nitrilbutadienkautschuke sind unter Europrene™ von Eni Chem, oder unter Krynac™ und Perbunan™ von Bayer, oder unter Breon™ und Nipol N™ von Zeon erhältlich. Hydrierte Nitril-Butadien Kautschuke sind unter Therban™ von Bayer und unter ZetpolTM von Zeon erhältlich. Nitrilbutadienkautschuke werden entweder heiß oder kalt polymerisiert. Die Nitrilkautschuke S1 weisen einen Acrylnitrilanteil von größer als 35 Gew.-% auf. Um eine vollständige Phasenseparierung zu vermeiden, sollte der Acrylnitrilanteil aber bei kleiner als 60 Gew.-% wiederum bezogen auf den Gesamtanteil von S1 liegen. Ein weiteres Kriterium stellt die Glasübergangstemperatur der Nitrilkautschuke S1 dar. Um eine Mikrophasenseparierung zu erreichen, sollte in einer bevorzugten Auslegung die statische Glasübergangstemperatur im DSC bei größer/gleich -20 °C, bevorzugter bei größer -15 °C liegen. Ein weiteres Kriterium für den Nitrilkautschuk S1 ist die Mooney Viskosität. Da eine hohe Flexibilität bei tiefen Temperaturen gewährleistet werden muss, sollte diese unterhalb von 120 liegen (Mooney ML 1+4 bei 100 °C, gemäß der DIN 53523). Kommerzielle Beispiele für solche Nitrilkautschuke sind z.B. Nipol™ 40-5 der Firma Zeon Chemicals.

Nitrilkautschuke S2

Nitrilbutadienkautschuke sind unter Europrene™ von Eni Chem, oder unter KrynacTM und Perbunan™ von Bayer, oder unter Breon™ und Nipol N™ von Zeon erhältlich. Hydrierte Nitril-Butadien Kautschuke sind unter Therban™ von Bayer und unter Zetpol™ von Zeon erhältlich. Nitrilbutadienkautschuke werden entweder heiß oder kalt polymerisiert. Die Nitrilkautschuke S2 weisen einen Acrylnitrilanteil von kleiner als 35 Gew.-% und größer als 25 Gew.-% auf. Ein weiteres Kriterium stellt die Glasübergangstemperatur der Nitrilkautschuke S2 dar. Um eine Mikrophasenseparierung zu erreichen, sollte in einer bevorzugten Auslegung die statische Glasübergangstemperatur im DSC bei kleiner -20 °C, bevorzugter bei kleiner -25 °C liegen. Ein weiteres Kriterium für den Nitrilkautschuk S2 ist die Mooney Viskosität. Da eine hohe Flexibilität bei tiefen Temperaturen gewährleistet werden muss, sollte diese unterhalb von 100 liegen (Mooney ML 1+4 bei 100 °C, gemäß der DIN 53523). Kommerzielle Beispiele für solche Nitrilkautschuke sind z.B. Breon™ N33C50 der Firma Zeon Chemicals.

Nitrilkautschuke S3

Nitrilbutadienkautschuke sind unter Europrene™ von Eni Chem, oder unter KrynacTM und Perbunan™ von Bayer, oder unter Breon™ und Nipol N™ von Zeon erhältlich. Hydrierte Nitril-Butadien Kautschuke sind unter Therban™ von Bayer und unter Zetpol™ von Zeon erhältlich. Nitrilbutadienkautschuke werden entweder heiß oder kalt polymerisiert. Die Nitrilkautschuke S3 weisen einen Acrylnitrilanteil von kleiner als 25 Gew.-% auf. Um eine vollständige Phasenseparierung zu vermeiden, sollte der Acrylnitrilanteil aber bei größer als 4 Gew.-% wiederum bezogen auf den Gesamtanteil von S3 liegen. Ein weiteres Kriterium stellt die Glasübergangstemperatur der Nitrilkautschuke S3 dar. Um eine Mikrophasenseparierung zu erreichen, sollte in einer bevorzugten Auslegung die statische Glasübergangstemperatur im DSC bei kleiner/gleich -35 °C, bevorzugter bei kleiner -40 °C liegen. Ein weiteres Kriterium für den Nitrilkautschuk S3 ist die Mooney Viskosität. Da eine hohe Flexibilität bei tiefen Temperaturen gewährleistet werden muss, sollte diese unterhalb von 100 liegen (Mooney ML 1+4 bei 100 °C, gemäß der DIN 53523). Kommerzielle Beispiele für solche Nitrilkautschuke sind z.B. Nipol™ 1034-60 der Firma Zeon Chemicals.

In der Haftklebemasse auf Basis von festem Acrylnitril-Butadien-Kautschuk der Haftklebemassenschicht HS1 und/oder HS2 können dem Acrylnitril-Butadien-Kautschuk zur Verbesserung der Verarbeitbarkeit thermoplastische Elastomere wie beispielsweise Synthesekautschuke mit einem Anteil von bis zu 5 Gew.-% zugesetzt werden, bezogen auf das Gesamtgewicht der Haftklebemasse. Stellvertretend genannt seien an dieser Stelle vor allem die besonders verträglichen Styrol-Isopren-Styrol(SIS)- und Styrol-Butadien-Styrol(SBS)-Typen.

In einer besonders bevorzugten Ausführungsform ist die Haftklebemasse auf Basis von festem Acrylnitril-Butadien-Kautschuk der Haftklebemassenschicht HS1 und/oder HS2 eine Zusammensetzung aus festem und flüssigem Acrylnitril-Butadien-Kautschuk, einem oder mehreren Klebharz(en), vorzugsweise Alterungsschutzmittel(n) und gegebenenfalls Trennhilfsmitteln. Darüber hinaus können optional zusätzlich Weichmacher, Füllstoffe und/oder Farbstoffe enthalten sein, typischerweise in geringen Mengen.

Den Acrylnitril-Butadien-Kautschuken können inerte Trennhilfsmittel wie Talkum, Silicate (Talk, Ton, Glimmer), Zinkstearat und PVC-Puder zugesetzt sein, und zwar insbesondere in einer Größenordnung von 3 phr.

In der Haftklebemasse auf Basis von festem Acrylnitril-Butadien-Kautschuk der Haftklebemassenschicht HS1 und/oder HS2 liegt der Anteil an Klebharz vorzugsweise bei insgesamt 40 bis 120 phr, bevorzugter bei insgesamt 50 bis 110 phr uns insbesondere bei insgesamt 60 bis 100 phr. Hierdurch lassen sich typischerweise gleichzeitig besonders gute Adhäsions- und Kohäsionswerte erzielen.

Als Klebharze können in der Haftklebemassenschicht HS1 und/oder HS2 des erfindungsgemäßen Haftklebestreifens insbesondere hydrierte und nicht hydrierte Kohlenwasserstoffharze und Polyterpenharze eingesetzt werden. Bevorzugt geeignet sind unter anderem hydrierte Polymerisate des Dicyclopentadiens (zum Beispiel Escorez 5300er Serie; Exxon Chemicals), hydrierte Polymerisate von bevorzugt $C_8$- und Cg-Aromaten (zum Beispiel Regalite und Regalrez Serien; Eastman Inc. oder Arkon P Serie; Arakawa). Diese können durch Hydrierung von Polymerisaten aus reinen Aromatenströmen entfließen oder auch durch Hydrierung von Polymerisaten auf der Basis von Gemischen unterschiedlichen Aromaten basieren. Geeignet sind auch teilhydrierte Polymerisate von $C_8$- und Cg-Aromaten (zum Beispiel Regalite und Regalrez Serien; Eastman Inc. oder Arkon M; Arakawa), hydrierte Polyterpenharze (zum Beispiel Clearon M; Yasuhara), hydrierte $C_5/C_9$-Polymerisate (zum Beispiel ECR-373; Exxon Chemicals), aromatenmodifizierte selektiv hydrierte Dicyclopentadienderivate (zum Beispiel Escorez 5600er Serie; Exxon Chemicals). Die vorgenannten Klebeharze können sowohl allein als auch im Gemisch eingesetzt werden.

Darüber hinaus können aber auch nicht hydrierte Harze eingesetzt werden, wenn Vernetzungspromotoren wie zum Beispiel mehrfunktionelle Acrylate eingesetzt werden.

Auch andere nicht hydrierte Kohlenwasserstoffharze, nicht hydrierte Analoga der oben beschriebenen hydrierten Harze, können eingesetzt werden.

Weiterhin können kolophoniumbasierende Harze (zum Beispiel Foral, Foralyn) verwendet werden.

Die vorstehend erwähnten Kolophoniumharze schließen zum Beispiel natürliches Kolophonium, polymerisiertes Kolophonium, teilweise hydriertes Kolophonium, vollständig hydriertes Kolophonium, veresterte Produkte dieser Kolophoniumarten (wie Glycerinester, Pentaerythritester, Ethylenglycolester und Methylester) und Kolophoniumderivate (wie Disproportionierungs-Kolophonium, mit Fumarsäure modifiziertes Kolophonium und mit Kalk modifiziertes Kolophonium) ein.

Gegebenenfalls handelt es sich bei den Klebharzen um Polyterpenharze auf Basis von $\alpha$-Pinen und/oder ß-Pinen und/oder $\delta$-Limonen oder Terpenphenolharze.

Beliebige Kombinationen dieser können eingesetzt werden, um die Eigenschaften der resultierenden Haftklebemasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Besonders bevorzugt eingesetzte Harze sind Terpenphenolharze und/oder Polyterpene, und insbesondere Terpenphenolharze, beispielsweise Terpenphenolharze wie sie von der Firma DRT unter dem Handelsnamen Dertophene oder der Firma Arizona unter dem Handelsnamen Sylvares vertrieben werden.

Die Haftklebemasse der Haftklebemassenschicht HS1 und/oder HS2 kann zur Einstellung von optischen und klebtechnischen Eigenschaften Additive wie Füllstoffe, Farbstoffe oder Alterungsschutzmittel (Antiozonantien, Antioxidantien (primäre und sekundäre), Lichtschutzmittel usw.) enthalten.

Als Additive werden typischerweise genutzt:

- primäre Antioxidantien wie zum Beispiel sterisch gehinderte Phenole
- sekundäre Antioxidantien wie zum Beispiel Phosphite oder Thioether
- Lichtschutzmittel wie zum Beispiel UV-Absorber oder sterisch gehinderte Amine

Die Füllstoffe können verstärkend oder nicht verstärkend sein. Vor allem zu nennen sind hier Siliziumdioxide (sphärisch, nadelförmig oder unregelmäßig wie die pyrogenen Silicas), Schichtsilikate, Kalziumcarbonate, Zinkoxide, Titandioxide, Aluminiumoxide oder Aluminiumoxidhydroxide.

Die Konzentration der die optischen und klebtechnischen Eigenschaften beeinflussenden Additive liegt vorzugsweise bei bis zu 20 Gew.-%, bevorzugter bei bis zu 15 Gew.-%, und insbesondere bei bis zu 5 Gew.-%, jeweils bezogen auf das Gesamtgewicht der Haftklebemasse.

Erfindungsgemäß sollten in einer erfindungsgemäß eingesetzten Haftklebemasse auf Basis von festem Acrylnitril-Butadien-Kautschuk der Haftklebemassenschicht HS1 und/oder HS2 die Anteile sämtlicher zugesetzter Stoffe (neben Acrylnitril-Butadien-Kautschuk und Klebharz), wie zum Beispiel Synthesekautschuke und/oder thermoplastische Elastomere und/oder Füllstoffe und/oder Farbstoffe und/oder Alterungsschutzmittel, vorzugsweise in der Summe 5 Gew.-%, bevorzugter 2 Gew.-%, jeweils bezogen auf das Gesamtgewicht der Haftklebemasse, nicht übertreffen. Die aufgezählten Stoffe sind nicht zwingend, sondern lediglich optional in der Haftklebemasse enthalten, d.h. die Haftklebemasse funktioniert auch, ohne dass diese einzeln oder in beliebiger Kombination zugesetzt sind, also ohne Synthesekautschuke und/oder Elastomere und/oder Füllstoffe und/oder Farbstoffe und/oder Alterungsschutzmittel.

Die Haftklebemassenschicht HS1 und/oder HS2 des erfindungsgemäßen Haftklebestreifens ist gemäß einer bevorzugten Ausführungsform geschäumt, was typischerweise vor allem nochmals verbesserte Schockresistenzen nach sich ziehen kann. Die Schäumung erfolgt insbesondere durch das Einbringen und nachfolgende Expandieren von Mikroballons.

Unter "Mikroballons" werden erfindungsgemäß elastische und somit in ihrem Grundzustand expandierbare Mikrohohlkugeln verstanden, die eine thermoplastische Polymerhülle aufweisen. Diese Kugeln sind mit niedrigsiedenden Flüssigkeiten oder verflüssigtem Gas gefüllt. Als Hüllenmaterial finden insbesondere Polyacrylnitril, PVDC, PVC oder Polyacrylate Verwendung. Als niedrigsiedende Flüssigkeit sind insbesondere Kohlenwasserstoffe der niederen Alkane, beispielsweise Isobutan oder Isopentan geeignet, die als verflüssigtes Gas unter Druck in der Polymerhülle eingeschlossen sind.

Durch ein Einwirken auf die Mikroballons, insbesondere durch eine Wärmeeinwirkung, erweicht die äußere Polymerhülle. Gleichzeitig geht das in der Hülle befindliche flüssige Treibgas in seinen gasförmigen Zustand über. Dabei dehnen sich die Mikroballons irreversibel aus und expandieren dreidimensional. Die Expansion ist beendet, wenn sich der Innen- und der Außendruck ausgleichen. Da die polymere Hülle erhalten bleibt, erzielt man so einen geschlossenzelligen Schaum.

Es ist eine Vielzahl an Mikroballontypen kommerziell erhältlich, welche sich im Wesentlichen über ihre Größe (6 bis 45 $\mu$m Durchmesser im unexpandierten Zustand) und ihre zur Expansion benötigten Starttemperaturen (75 bis 220 °C) differenzieren. Ein Beispiel für kommerziell erhältliche Mikroballons sind die Expancel® DU-Typen (DU = dry unexpanded) von der Firma Akzo Nobel.

Unexpandierte Mikroballontypen sind auch als wässrige Dispersion mit einem Feststoffbeziehungsweise Mikroballonanteil von ca. 40 bis 45 Gew.-% erhältlich, weiterhin auch als polymergebundene Mikroballons (Masterbatche), zum Beispiel in Ethylenvinylacetat mit einer Mikroballonkonzentration von ca. 65 Gew.-%. Sowohl die Mikroballon-Dispersionen als auch die Masterbatche sind wie die DU-Typen zur Herstellung einer geschäumten Haftklebemassenschicht HS1 und/oder HS2 geeignet.

Eine geschäumte Haftklebemassenschicht HS1 und/oder HS2 kann alternativ auch mit sogenannten vorexpandierten Mikroballons erzeugt werden. Bei dieser Gruppe findet die Expansion schon vor der Einmischung in die Polymermatrix statt. Vorexpandierte Mikroballons sind beispielsweise unter der Bezeichnung Dualite® oder mit der Typenbezeichnung Expancel xxx DE (Dry Expanded) von der Firma Akzo Nobel kommerziell erhältlich.

Werden in einer erfindungsgemäß eingesetzten Haftklebemasse Mikroballons eingesetzt, so beträgt der mittlere Durchmesser der von den Mikroballons gebildeten Hohlräume in der Haftklebemasseschicht HS1 und/oder HS2 typischerweise 10 bis 200 $\mu$m, wie zum Beispiel 20 bis 50 $\mu$m oder 60 bis 100 $\mu$m. Die Bestimmung des mittleren Durchmessers der von den Mikroballons gebildeten Hohlräume in einer Haftklebemassenschicht erfolgt anhand von Kryobruchkanten des Haftklebestreifens im Rasterelektronenmikroskop (REM) bei 500-facher Vergrößerung. Es wird von den auf REM-Aufnahmen von 5 verschiedenen Kryobruchkanten des Haftklebestreifens zu sehenden Mikroballons der zu untersuchenden Haftklebemasseschicht jeweils grafisch der Durchmesser ermittelt, wobei das arithmetische Mittel aller ermittelten Durchmesser den mittleren Durchmesser der von den Mikroballons gebildeten Hohlräume der Haftklebemasseschicht im Sinne der vorliegenden Anmeldung darstellt. Die Durchmesser der auf den Aufnahmen zu sehenden Mikroballons werden graphisch derart ermittelt, dass aus den REM-Aufnahmen für jeden einzelnen Mikroballon der zu untersuchenden Haftklebemasseschicht dessen maximale Ausdehnung in beliebiger (zweidimensionaler) Richtung entnommen wird und als dessen Durchmesser angesehen wird.

Wird mittels Mikroballons geschäumt, dann können die Mikroballons als Batch, Paste oder als unverschnittenes oder verschnittenes Pulver der Formulierung zugeführt werden. Des Weiteren können sie in Lösungsmittel suspendiert vorliegen.

Der Anteil der Mikroballons in der Haftklebemasse der Haftklebemassenschicht HS1 und/oder HS2 liegt gemäß einer bevorzugten Ausführungsform der Erfindung zwischen größer 0 Gew.-% und 10 Gew.-%, bevorzugter zwischen 0,25 Gew.-% und 5 Gew.-%, und insbesondere zwischen 0,5 und 1,5 Gew.-%, jeweils bezogen auf das Gesamtgewicht der Haftklebemasse. In diesen Bereichen lassen sich Haftklebestreifen bereitstellen, die üblicherweise besonders hohe Schockresistenzen aufweisen.

Eine erfindungsgemäße, expandierbare Mikrohohlkugeln enthaltende Polymermasse darf zusätzlich auch nicht-expandierbare Mikrohohlkugeln enthalten. Entscheidend ist nur, dass nahezu alle Gas beinhaltenden Kavernen geschlossen sind durch eine dauerhaft dichte Membran, egal ob diese Membran nun aus einer elastischen und thermoplastisch dehnbaren Polymermischung besteht oder etwa aus elastischem und - im Spektrum der in der Kunststoffverarbeitung möglichen Temperaturen - nicht-thermoplastischem Glas.

Geeignet für die Haftklebemassenschichten HS1 und/oder HS2 sind außerdem - unabhängig gewählt von anderen Additiven - Polymervollkugeln, Glashohlkugeln, Glasvollkugeln, keramische Hohlkugeln, keramische Vollkugeln und/oder Kohlenstoffvollkugeln ("Carbon Micro Balloons").

Die absolute Dichte einer geschäumten erfindungsgemäßen Haftklebemasse beträgt bevorzugt 350 bis 990 kg/m$^3$, stärker bevorzugt 450 bis 970 kg/m$^3$, insbesondere 500 bis 900 kg/m$^3$. Die relative Dichte beschreibt das Verhältnis der Dichte der geschäumten erfindungsgemäßen Haftklebemasse zur Dichte der rezepturidentischen, ungeschäumten erfindungsgemäßen Haftklebemasse. Die relative Dichte einer erfindungsgemäßen geschäumten Haftklebemasse beträgt vorzugsweise 0,35 bis 0,99, stärker bevorzugt 0,45 bis 0,97, insbesondere 0,50 bis 0,90.

In einer weiteren bevorzugten Ausführungsform des erfindungsgemäßen Haftklebestreifens ist auf der der Haftklebemassenschicht HS1 gegenüberliegenden Oberfläche des Trägers eine Haftklebemassenschicht HS2 angeordnet, die aus einer Haftklebemasse besteht, deren Basispolymer ausschließlich aus Polymer besteht, das von Acrylnitril-Butadien-Kautschuk verschieden ist, wobei die Haftklebemasse als Basispolymer vorzugsweise mindestens ein Vinylaromatenblockcopolymer enthält. Besonders bevorzugt besteht in der Haftklebemasse der Haftklebemassenschicht HS2 das Basispolymer ausschließlich aus Vinylaromaten-blockcopolymer, wobei insbesondere neben dem Vinylaromatenblockcopolymer kein weiteres Polymer in der Haftklebemasse vorhanden ist. Üblicherweise ist in der Haftklebemasse auf Basis von Vinylaromatenblockcopolymer der Haftklebemassenschicht HS2 ferner mindestens ein Klebharz enthalten, insbesondere um die Adhäsion in gewünschter Weise zu erhöhen. Das Klebharz sollte mit dem Elastomerblock der Blockcopolymere verträglich sein. Ebenso vorzugsweise ist mindestens die Haftklebemassenschicht HS1, bevorzugter ferner auch die Haftklebemassenschicht HS2, eine außenliegende Haftklebemassenschicht. Besonders bevorzugt besteht der Haftklebestreifen ausschließlich aus einem dehnbaren Träger, d.h. einem Träger mit einer Reißdehnung von mindestens 250%, einer Haftklebemassenschicht HS1 auf Basis von festem Acrylnitril-Butadien-Kautschuk und einer Haftklebemassenschicht HS2, die aus einer Haftklebemasse besteht, deren Basispolymer ausschließlich aus Polymer besteht, das von Acrylnitril-Butadien-Kautschuk verschieden ist, wobei die Haftklebemasse als Basispolymer vorzugsweise mindestens ein Vinylaromatenblockcopolymer enthält.

Vorzugsweise enthält das Vinylaromatenblockcopolymer Polymerblöcke (i) überwiegend gebildet von Vinylaromaten (A-Blöcke), bevorzugt Styrol, und gleichzeitig (ii) solche überwiegend gebildet durch Polymerisation von 1,3-Dienen (B-Blöcke), wie zum Beispiel Butadien und Isopren oder einem Copolymer aus beidem. Ebenso vorzugsweise wird als Vinylaromatenblockcopolymer mindestens ein Synthesekautschuk in Form eines Blockcopolymers mit einem Aufbau A-B, A-B-A, $(A-B)_n$, $(A-B)_nX$ oder $(A-B-A)_nX$ eingesetzt, worin

- die Blöcke A unabhängig voneinander für ein Polymer, gebildet durch Polymerisation mindestens eines Vinylaromaten,
- die Blöcke B unabhängig voneinander für ein Polymer, gebildet durch Polymerisation von konjugierten Dienen mit 4 bis 18 C-Atomen, oder für ein teilhydriertes Derivat eines solchen Polymers,
- X für den Rest eines Kopplungsreagenzes oder Initiators und
- n für eine ganze Zahl $\geq$ 2 stehen.

Die Vinylaromaten zum Aufbau des Blocks A umfassen vorzugsweise Styrol, $\alpha$-Methylstyrol und/oder andere Styrol-Derivate, besonders bevorzugt Styrol. Das Monomer für den Block B ist ferner vorzugsweise ausgewählt aus der Gruppe bestehend aus Butadien, Isopren, Ethylbutadien, Phenylbutadien, Piperylen, Pentadien, Hexadien, Ethylhexadien und Dimethylbutadien sowie einer beliebigen Mischung dieser Monomere. Der Anteil der Vinylaromatenblockcopolymere, wie insbesondere Styrolblockcopolymere, in Summe bezogen auf die gesamte Haftklebemasse der Haftklebemasseschicht HS2 beträgt mindestens 20 Gew.-%, vorzugsweise mindestens 30 Gew.-%, weiter bevorzugt mindestens 35 Gew.-% und gleichzeitig maximal 75 Gew.-%, bevorzugt maximal 65 Gew.-%, ganz besonders bevorzugt maximal 55 Gew.- %. Ein zu geringer Anteil an Vinylaromatenblockcopolymeren hat zur Folge, dass die Kohäsion der Haftklebemasse relativ niedrig ist. Ein zu hoher Anteil an Vinylaromatenblockcopolymeren hat wiederum zur Folge, dass die Haftklebemasse kaum noch haftklebrig ist.

Falls in der Haftklebemasse auf Basis von Vinylaromatenblockcopolymer der Haftklebemassenschicht HS2 Klebharz enthalten ist, so ist es vorzugsweise in einer Menge von 20 bis 60 Gew.-%, und bevorzugter von 30 bis 50 Gew.-%, jeweils bezogen auf das Gesamtgewicht der Haftklebemasse der Haftklebemassenschicht HS2, enthalten.

Als Klebharz wird in der Haftklebemasse auf Basis von Vinylaromatenblockcopolymer einer Haftklebemassenschicht HS2 vorzugsweise zu mindestens 75 Gew.-% (bezogen auf den Gesamtharzanteil) ein Harz gewählt mit einem DACP (diacetone alcohol cloud point) von größer -20 °C, bevorzugt größer 0 °C, wobei es sich insbesondere um Kohlenwasserstoffharz oder Terpenharz oder eine Mischung dergleichen handelt. Solche unpolaren Klebharze wandern im Wesentlichen nicht in polare Träger hinein, so dass sich eine langzeitstabile Klebrigkeit der Haftklebemassenschicht sowie eine langzeitstabile Zugfestigkeit des angrenzenden Trägers ergeben.

Erfindungsgemäß weisen die Haftklebemasseschichten HS1 und/oder HS2 des erfindungsgemäßen Haftklebestreifens unabhängig von ihrer Zusammensetzung vorzugsweise eine Dicke von 10 bis 200 $\mu$m, wie zum Beispiel von 20 bis 50 $\mu$m auf.

Vorzugsweise beträgt der Masseauftrag einer bei der Herstellung eines erfindungsgemäßen Haftklebestreifens eingesetzten Haftklebemasse 10 bis 200 g/m², bevorzugter 15 bis 100 g/m², und insbesondere 20 bis 75 g/m², bezogen auf eine im Wesentlichen lösungsmittelfreie Form.

Der erfindungsgemäße Haftklebestreifen umfasst einen dehnbaren Träger, d.h. einen Träger mit einer Reißdehnung von mindestens 250 %, wobei der Träger vorzugsweise eine Reißdehnung von mindestens 300 %, bevorzugter von mindestens 400 % und insbesondere von mindestens 500 % wie zum Beispiel von mindestens 600 % aufweist. Der Träger weist die angegebenen Reißdehnungswerte in der Längsrichtung und/oder in der Querrichtung auf, und insbesondere sowohl in der Längsrichtung als auch in der Querrichtung. Die Dehnbarkeit eines Trägers mit einer Reißdehnung von mindestens 250 % in der Längsrichtung und/oder der Querrichtung reicht aus, um ein Ablösen des erfindungsgemäßen Haftklebestreifens durch dehnendes Verstrecken in der entsprechenden Richtung, bei verschiedenen Abziehwinkeln gegenüber der Verklebungsebene wie z.B. 0° oder 90°, zu gewährleisten. Als Träger können zum Beispiel sehr dehnfähige Folien dienen. Beispiele für vorteilhaft einsetzbare dehnbare Träger sind transparente Ausführungen aus WO 2011/124782 A1, DE 10 2012 223 670 A1, WO 2009/114683 A1, WO 2010/077541 A1, WO 2010/078396 A1.

Vorzugsweise weist der Träger in der Längsrichtung und/oder der Querrichtung, insbesondere in der Längsrichtung und der Querrichtung, ein Rückstellvermögen von über 50 % auf, bevorzugter von über 70 % und insbesondere über 80 %. Das heißt, dass vorzugsweise der elastische Anteil des Trägers zumindest in der Längsrichtung oder der Querrichtung, insbesondere sowohl in der Längsrichtung als auch in der Querrichtung, größer ist als der plastische Anteil.

Die Dicke des Trägers liegt vorzugsweise im Bereich von 10 bis 200 $\mu$m, bevorzugter von 20 bis 150 $\mu$m, und insbesondere 50 bis 100 $\mu$m.

Der Träger weist typischerweise in der Längsrichtung und/oder der Querrichtung, insbesondere in der Längsrichtung und der Querrichtung, eine Spannung bei 50 % Dehnung von kleiner als 20 N/mm² auf, bevorzugt von kleiner als 10 N/mm², um ein einfaches Ablösen des Haftklebestreifens in der entsprechenden Richtung bzw. in den entsprechenden Richtungen ohne allzu großen Kraftaufwand zu ermöglichen.

Zur Herstellung der Trägers können filmbildende oder extrusionsfähige Polymere eingesetzt werden, die zusätzlich mono- oder biaxial orientiert sein können.

In einer bevorzugten Ausführung werden Polyurethane eingesetzt. Polyurethane sind chemisch und/oder physikalisch vernetzte Polykondensate, die typischerweise aus Polyolen und Isocyanaten aufgebaut werden. Je nach Art und Einsatzverhältnis der einzelnen Komponenten sind dehnbare Materialien erhältlich, die im Sinne dieser Erfindung vorteilhaft eingesetzt werden können. Rohstoffe, die dem Formulierer hierzu zur Verfügung stehen, sind zum Beispiel in EP 0 894 841 B1 und EP 1 308 492 B1 genannt. Beim Polyurethan handelt es sich vorzugsweise um ein Polyetherurethan oder ein Polyesterurethan.

Ferner lassen sich Polyolefine vorteilhaft als Ausgangsmaterialien für den dehnbaren Träger verwenden. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern wie zum Beispiel die Erweichungstemperatur und/oder die Zugfestigkeit.

Dem Fachmann sind weitere Rohstoffe bekannt, aus denen erfindungsgemäße Träger aufgebaut werden können. Weiterhin ist es vorteilhaft, Kautschuk basierende Materialien in Trägern einzusetzen, um die gewünschte Dehnbarkeit zu realisieren. Als Kautschuk oder Synthesekautschuk oder daraus erzeugten Verschnitten als Ausgangsmaterial für dehnbare Träger kann der Naturkautschuk grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) und der Polyurethane und/oder deren Verschnitten gewählt werden.

Besonders vorteilhaft einsetzbar als Materialien für dehnbare Träger sind Blockcopolymere. Dabei sind einzelne Polymerblöcke kovalent miteinander verknüpft. Die Blockverknüpfung kann in einer linearen Form vorliegen, aber auch in einer sternförmigen oder Pfropfcopolymervariante. Ein Beispiel für ein vorteilhaft einsetzbares Blockcopolymer ist ein lineares Triblockcopolymer, dessen zwei endständige Blöcke eine Erweichungstemperatur von mindestens 40 °C, bevorzugt mindestens 70 °C aufweisen und dessen Mittelblock einer Erweichungstemperatur von höchstens 0 °C, bevorzugt höchstens -30 °C aufweist. Höhere Blockcopolymere, etwa Tetrablockcopolymere sind ebenfalls einsetzbar. Wichtig ist, dass zumindest zwei Polymerblöcke gleicher oder verschiedener Art im Blockcopolymer enthalten sind, die eine Erweichungstemperatur jeweils von mindestens 40 °C, bevorzugt mindestens 70 °C aufweisen und die über zumindest einen Polymerblock mit einer Erweichungstemperatur von höchstens 0 °C, bevorzugt höchstens -30 °C in der Polymerkette voneinander separiert sind. Beispiele für Polymerblöcke sind Polyether wie zum Beispiel Polyethylenglykol, Polypropylenglykol oder Polytetrahydrofuran, Polydiene, wie zum Beispiel Polybutadien oder Polyisopren, hydrierte Polydiene, wie zum Beispiel Polyethylenbutylen oder Polyethylenpropylen, Polyester, wie zum Beispiel Polyethylenterephthalat, Polybutandioladipat oder Polyhexandioladipat, Polycarbonat, Polycaprolacton, Polymerblöcke vinylaromatischer Monomere, wie zum Beispiel Polystyrol oder Poly-[a]-Methylstyrol, Polyalkylvinylether, Polyvinylacetat, Polymerblöcke $[\alpha],[\beta]$-ungesättigter Ester wie insbesondere Acrylate oder Methacrylate. Dem Fachmann sind entsprechende Erweichungstemperaturen bekannt. Alternativ schlägt er sie beispielsweise im Polymer Handbook [J. Brandrup, E. H. Immergut, E. A. Grulke (Hrsg.), Polymer Handbook, 4. Aufl. 1999, Wiley, New York] nach. Polymerblöcke können aus Copolymeren aufgebaut sein.

Zur Herstellung eines Trägermaterials kann es auch hier angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Des Weiteren sind als Träger bahnförmige Schaumstoffe (beispielsweise aus Polyethylen und Polyurethan) geeignet.

Die Träger können mehrschichtig ausgestaltet sein oder einschichtig. Vorzugsweise besteht der Träger nur aus einer einzigen Schicht.

Des Weiteren können die Träger Deckschichten aufweisen, beispielsweise Sperrschichten, die ein Eindringen von Komponenten aus der Klebemasse in den Träger oder umgekehrt unterbinden. Diese Deckschichten können auch Barriereeigenschaften haben, um so ein Durchdiffundieren von Wasserdampf und/oder Sauerstoff zu verhindern.

Zur besseren Verankerung der Haftklebemasse(n) auf dem Träger kann der Träger mit den bekannten Maßnahmen wie Corona, Plasma oder Flammen vorbehandelt werden. Auch die Nutzung eines Primers ist möglich. Idealerweise kann aber auf eine Vorbehandlung verzichtet werden.

Die Rückseite des Trägers kann einer antiadhäsiven physikalischen Behandlung oder Beschichtung unterzogen sein.

Schließlich kann der erfindungsgemäße Haftklebestreifen ein- oder beidseitig mit einem Liner, also einem temporären Träger, der beidseitig antiadhäsiv beschichtet ist, eingedeckt sein. Ein Liner (Trennpapier, Trennfolie) ist nicht Bestandteil eines Klebebandes sondern nur ein Hilfsmittel zu dessen Herstellung, Lagerung oder für die Weiterverarbeitung durch Stanzen. Darüber hinaus ist ein Liner im Gegensatz zu einem Klebebandträger nicht fest mit einer Klebstoffschicht verbunden.

Typische Konfektionierformen der erfindungsgemäßen Haftklebestreifen sind Klebebandrollen sowie Klebestreifen, wie sie zum Beispiel in Form von Stanzlingen erhalten werden. Vorzugsweise weisen alle Schichten im Wesentlichen die Form eines Quaders auf. Weiter vorzugsweise sind alle Schichten vollflächig miteinander verbunden. Optional kann ein nicht haftklebriger Anfasserbereich vorgesehen sein, von welchem aus der Ablöseprozess ausgeführt werden kann.

Der Haftklebestreifen weist vorzugsweise eine Dicke auf von 20 $\mu$m bis 600 $\mu$m, weiter vorzugsweise von 70 $\mu$m bis 200 $\mu$m auf.

Die Herstellung der erfindungsgemäßen Haftklebestreifen kann durch übliche, dem Fachmann bekannte Verfahren erfolgen. Die Herstellung und Verarbeitung der Haftklebemassen kann sowohl aus der Lösung als auch aus der Schmelze erfolgen. Das Aufbringen der Haftklebemassen auf die Träger kann durch direkte Beschichtung oder durch Laminierung, insbesondere Heißlaminierung erfolgen. Beispielsweise können die Haftklebemassen inklusive der Additive, gelöst in einem geeigneten Lösungsmittel, mittels beispielsweise Rasterwalzenauftrag, Kommarakelbeschichtung, Mehrwalzenbeschichtung oder in einem Druckverfahren auf Träger beschichtet und anschließend das Lösungsmittel in einem Trockenkanal oder -ofen entfernt werden. Alternativ kann die Beschichtung der Träger auch in einem lösemittelfreien Verfahren erfolgen. Hierzu wird das Basispolymer in einem Extruder erwärmt und aufgeschmolzen. In dem Extruder können weitere Prozessschritte wie das Mischen mit den beschriebenen Additiven, Filtration oder eine Entgasung erfolgen. Die Schmelze wird dann mittels eines Kalanders auf die Träger beschichtet.

Der erfindungsgemäße Haftklebestreifen wird vorzugsweise zur Verklebung von Teilen in elektronischen Geräten, insbesondere in mobilen elektronischen Geräten wie z.B. Tablets, Mobiltelefonen, Smart-Watches und anderen Wearables verwendet. Beispielsweise kann er zur Verklebung von Akkus eingesetzt werden. Insbesondere für eine Verklebung in mobilen elektronischen Geräten ist der erfindungsgemäße Haftklebestreifen im Hinblick auf den dort nur geringen vorhandenen Platz sehr wertvoll, da er sich auch beim dort häufig erforderlichen dehnbaren Verstrecken in einem Winkel von über 45° gegenüber der Verklebungsfläche üblicherweise rückstands- und zerstörungsfrei wieder ablösen lässt, ohne zu reißen.

Anhand der nachfolgend beschriebenen Figuren sowie Beispielen werden besonders vorteilhafte Ausführungen der Erfindung näher erläutert, ohne damit die Erfindung unnötig einschränken zu wollen.

**Figuren**

Es zeigen

Figur 1 einen erfindungsgemäßen dreischichtigen Haftklebestreifen und

Figur 2 einen erfindungsgemäßen dreischichtigen Haftklebestreifen in einer alternativen Ausführungsform.

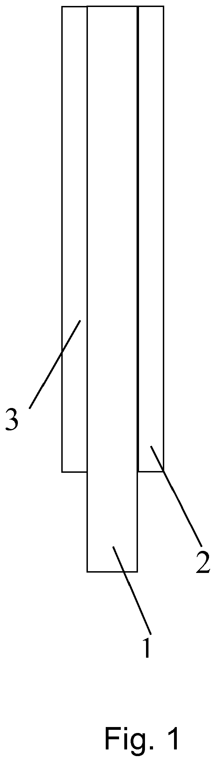

In der Figur 1 ist ein erfindungsgemäßer Haftklebestreifen aus drei Schichten 1, 2, 3 gezeigt, der sich durch dehnendes Verstrecken, beispielsweise in einem Winkel von mehr als 45° gegenüber der Verklebungsebene, rückstands- und zerstörungsfrei wieder ablösen lässt, ohne zu reißen. Der Streifen besteht aus einem dehnbaren Träger 1, d.h. einem Träger mit einer Reißdehnung von mindestens 250% in der Längs- und/oder in der Querrichtung, vorzugsweise sowohl in der Längs- als auch in der Querrichtung, wobei der Träger 1 einschichtig ausgeführt ist. Auf dem Träger sind beidseitig außenliegende erfindungsgemäß einsetzbare Klebemassenschichten 2, 3 vorhanden. Das überstehende Ende des Trägerschicht 1 kann als Anfasser dienen, ist aber nicht zwingend vorhanden.

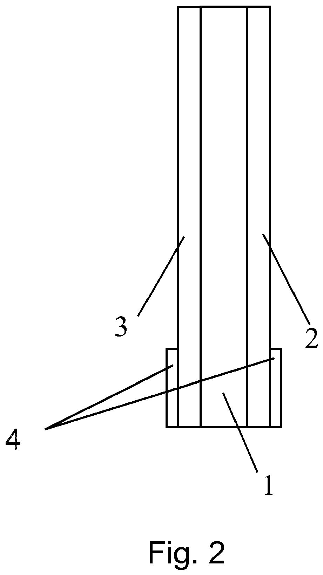

In der Figur 2 ist der erfindungsgemäße Haftklebestreifen in einer alternativen Variante gezeigt. Der Haftklebestreifen besteht aus drei Schichten 1, 2, 3, die kongruent übereinander angeordnet sind, nämlich dem einschichtigen dehnbaren Träger 1 und den beidseitig außenliegenden erfindungsgemäß einsetzbaren Klebemassenschichten 2 und 3. Um einen Anfasser zu erzeugen, an dem gezogen wird, um das dehnende Verstrecken (insbesondere in einem Winkel von mehr als 45° gegenüber der Verklebungsebene) zu erzielen, ist das eine Ende des Haftklebestreifens auf beiden Seiten durch das Aufbringen von bevorzugt silikonisierten Folien- oder Papierstücken 4 nicht haftklebrig ausgerüstet.

**Beispiele**

Beispiel 1 - Herstellung eines erfindungsgemäßen Haftklebestreifens:

Die Haftklebemasse enthaltend 62 Gew.-% des festen Acrylnitril-Butadien-Kautschuks Nipol 401, 5 Gew.-% des flüssigen Acrylnitril-Butadien-Kautschuks Nipol 1312 LV und 33 Gew.-% des Klebharzes Dertophene T, jeweils bezogen auf das Trockengewicht der Haftklebemasse, wurde als Lösungsmittel-basierte Masse in einem Kneter mit Doppelsigmaknethaken homogenisiert. Als Lösungsmittel wurde Methylethylketon verwendet. Der Kneter wurde dabei mittels Wasserkühlung gekühlt. Die genannten Bestandteile der Klebemasse sind wie folgt charakterisiert:

| Nipol 401: | fester Acrylnitril-Butadien-Kautschuk mit einem Acrylnitrilgehalt von 18,5 Gew.-%, einer Mooney-Viskosität (ML 1+4 bei 100 °C, gemäß der DIN 53523) von 73 bis 83 und einem $T_g$ von -37 °C. |
|---|---|
| Nipol 1312 LV: | flüssiger Acrylnitril-Butadien-Kautschuk mit einem Acrylnitrilgehalt von 26,5 Gew.-%, einer Brookfield-Viskosität von 9000 bis 16000 mPa*s, gemessen mit Spindel 4, 12 rpm, 50 °C, und einem $T_g$ von -23 °C. |
| Dertophene T: | Terpenphenolharz mit einem Erweichungspunkt von 95 °C. |

In einem ersten Schritt wurde zunächst der feste Acrylnitril-Butadien-Kautschuk Nipol 401 mit der gleichen Menge Methylethylketon für 12 Stunden bei 23 °C vorgequollen. Anschließend wurde dieser sogenannte Vorbatch für 2 Stunden geknetet. Anschließend wurden nochmals die oben gewählte Menge Methylethylketon und der flüssige Acrylnitril-Butadien-Kautschuk Nipol 1312 LV in zwei Schritten zugegeben und jeweils für 10 min geknetet. Anschließend wurde das Klebharz Dertophene T als Lösung in Methylethylketon mit einem Feststoffgehalt von 50 Gew.-% zugegeben und weitere 20 min homogen geknetet. Der finale Feststoffgehalt der Haftklebemasse wurde durch Zugabe von Methylethylketon auf 30 Gew. % eingestellt.

Die Haftklebemasse wurde anschließend auf einem handelsüblichen Laborstreichtisch (zum Beispiel von der Firma SMO (Sondermaschinen Oschersleben GmbH)) mit Hilfe eines Streichmessers auf einen 23 μm dicken Liner beschichtet. Das Methylethylketon wurde bei 105 °C im Umlufttrockenschrank für 10 Minuten abgedampft und somit die Haftklebemasse getrocknet. Die Spaltbreite beim Beschichten wurde so eingestellt, dass nach dem Abdampfen des Lösungsmittels eine Dicke der Haftklebemassenschicht von 35 μm erreicht wurde. Anschließend wurde ein Polyurethan-Träger mit einer Reißdehnung von mehr als 250 %, sowohl in der Längs- als auch in der Querrichtung, und einer Dicke von 80 μm beidseitig mit einer solchen vom Lösungsmittel befreiten Haftklebemassenschicht kaschiert. Es ergab sich ein doppelseitiges Klebeband mit einem dehnbaren Polyurethan-Träger und zwei Haftklebmassenschichten auf Basis von festem Acrylnitril-Butadien-Kautschuk.

Vergleichsbeispiel 2 - Herstellung eines nicht erfindungsgemäßen Haftklebestreifens:

Es wurde eine 40 Gew.-%ige Klebelösung in Benzin/Toluol/Aceton hergestellt von 50,0 Gew.-% des Vinylaromatenblockcopolymers Kraton D1102AS, 45,0 Gew.-% des Klebharzes Dercolyte A115, 4,5 Gew.-% des Klebharzes Wingtack 10 und 0,5 Gew.-% des Alterungsschutzmittels Irganox 1010. Die Gewichtsanteile der gelösten Bestandteile beziehen sich dabei jeweils auf das Trockengewicht der resultierenden Haftklebemasse. Die genannten Bestandteile der Haftklebemasse sind wie folgt charakterisiert:

| Kraton D1102AS: | Styrol-Butadien-Styrol-Triblockcopolymer der Firma Kraton Polymers mit 17 Gew.-% Diblock, Blockpolystyrolgehalt: 30 Gew.-% |
|---|---|
| Dercolyte A 115: | festes α-Pinen-Klebharz mit einer Ring und Ball-Erweichungstemperatur von 115 °C und einem DACP von 35 °C |
| Wingtack 10: | Flüssiges Kohlenwasserstoffharz der Firma Cray Valley |
| Irganox 1010: | Pentaerythritoltetrakis(3-(3,5-di-tert-butyl-4-hydroxyphenyl)propionat) der BASF SE |

Die Haftklebemasse wurde anschließend auf einem handelsüblichen Laborstreichtisch (zum Beispiel von der Firma SMO (Sondermaschinen Oschersleben GmbH)) mit Hilfe eines Streichmessers auf einen 23 μm dicken Liner beschichtet. Das Lösungsmittel wurde bei 105 °C im Umlufttrockenschrank für 10 Minuten abgedampft und somit die Haftklebemasse getrocknet. Die Spaltbreite beim Beschichten wurde so eingestellt, dass nach dem Abdampfen des Lösungsmittels eine Dicke der Haftklebemassenschicht von 35 μm erreicht wurde. Anschließend wurde ein Polyurethan-Träger mit einer Reißdehnung von mehr als 250 %, sowohl in der Längs- als auch in der Querrichtung, und einer Dicke von 80 μm beidseitig mit einer solchen vom Lösungsmittel befreiten Haftklebemassenschicht kaschiert. Es ergab sich ein doppelseitiges Klebeband mit einem dehnbaren Polyurethan-Träger und zwei Haftklebmassenschichten aus Basis von Vinylaromatenblockcopolymer.

Ergebnisse:

Das doppelseitige Klebeband aus Beispiel 1 mit einem dehnbaren Polyurethan-Träger und zwei Haftklebemassenschichten auf Basis von festem Acrylnitril-Butadien-Kautschuk weist gegenüber dem doppelseitigen Klebeband aus dem Vergleichsbeispiel 2 mit einem dehnbaren Polyurethan-Träger und zwei Haftklebmassenschichten aus Basis von Vinylaromatenblockcopolymer eine deutlich verringerte Reißeranfälligkeit beim dehnenden Verstrecken in einem Winkel von 90° gegenüber der Verklebungsebene auf (siehe Tabelle 1). Während beim Strippen des Vergleichsbeispiels etwa jeder dritte Haftklebestreifen reißt, konnten sämtliche Haftklebestreifens aus Beispiel 1 gestrippt werden, ohne zu reißen. Überraschenderweise führt somit in einem Klebeband mit einem dehnbaren Träger der Austausch von Haftklebemassenschichten auf Basis von Vinylaromatenblockcopolymer durch Haftklebemassenschichten auf Basis von festem Acrylnitril-Butadien-Kautschuk zu einer deutlichen Verringerung der Reißeranfälligkeit, selbst bei einem Abziehwinkel von 90° gegenüber der Verklebungsebene.

Ebenso überraschend führt im doppelseitigen Klebeband der Austausch von Haftklebemassenschichten auf Basis von Vinylaromatenblockcopolymer durch Haftklebemassenschichten auf Basis von festem Acrylnitril-Butadien-Kautschuk zu einer Steigerung der Querschlagzähigkeit, d.h. Schockresistenz in x,y-Richtung, sowie der Durchschlagzähigkeit, d.h. der Schockresistenz in z-Richtung, wie die Ergebnisse aus den DuPont x,y- bzw. DuPont z-Messungen belegen.

Auch konnte durch den genannten Austausch der Haftklebemasseschichten im doppelseitigen Klebeband die Klebkraft des Haftklebestreifens gesteigert werden.

Tabelle 1: Charakteristika eines erfindungsgemäßen sowie eines nicht erfindungsgemäßen Haftklebestreifens.

| Versuch | Klebkraft [N/cm] | DuPont x,y [mJ][1] | DuPont z [mJ][2] | Reißer bei 90° [%][3] |
|---|---|---|---|---|
| Beispiel 1 | 1,1 | 1122 | 633 | 0 |
| Vergleichsbeispiel 2 | 0,4 | 963 | 584 | 35 |
| [1]: Querschlagzähigkeit; [2]: Durchschlagzähigkeit; [3]: Reißeranfälligkeit | | | | |

## Prüfmethoden

Alle Messungen wurden, sofern nichts anderes angegeben ist, bei 23 °C und 50 % rel. Luftfeuchtigkeit durchgeführt. Die mechanischen und klebtechnischen Daten wurden wie folgt ermittelt:

*Erweichungspunkt $T_E$*

Die Angaben zum Erweichungspunkt $T_E$, auch Erweichungstemperatur genannt, von oligomeren Verbindungen, polymeren Verbindungen bzw. Harzen beziehen sich auf das Ring-Kugel-Verfahren gemäß DIN EN 1427:2007 bei entsprechender Anwendung der Bestimmungen (Untersuchung der Oligomer- Polymer- bzw. Harzprobe statt Bitumens bei ansonsten beibehaltener Verfahrensführung); die Messungen erfolgen im Glycerolbad.

*Reißdehnung, Zugfestigkeit, Spannung bei 50% Dehnung*

Die Reißdehnung, die Zugfestigkeit und die Spannung bei 50% Dehnung eines Trägers wurden in Anlehnung an DIN EN ISO 527-3 unter Verwendung eines Probestreifens des Trägers, Probekörper Typ 2, mit einer Breite von 20 mm bei einer Separationsgeschwindigkeit von 100 mm pro Minute gemessen. Der Anfangsabstand der Einspannklemmen betrug 100 mm. Das Prüfklima betrug 23 °C und 50 % rel. Luftfeuchtigkeit.

*Rückstellvermögen beziehungsweise Elastizität*

Zur Messung des Rückstellvermögens wurde um 100 % gedehnt, in dieser Dehnung für 30 s gehalten und dann entspannt. Nach einer Wartezeit von 1 min wurde erneut die Länge gemessen.

Das Rückstellvermögen berechnet sich nun wie folgt: $RV = ((L_{100} - L_{end})/L_0)\cdot100$

mit RV = Rückstellvermögen in %

$L_{100}$: Länge nach der Dehnung um 100 %

$L_0$: Länge vor der Dehnung

$L_{end}$: Länge nach der Relaxation von 1 min.

Das Rückstellvermögen entspricht dabei der Elastizität.

*Reißeranfälligkeit*

Aus dem zu untersuchenden Klebeband werden 20 Streifen in 10 mm Breite und 40 mm Länge gestanzt. Diese Streifen werden auf einer Länge von 30 mm auf eine mit Ethanol konditionierte PC-Platte geklebt, so dass ein 10 mm langer Anfasser übersteht. Eine zweite PC-Platte wird auf die zweite Seite der verklebten Streifen geklebt und zwar so, dass die beiden PC-Platten bündig übereinander liegen. Der Verbund wird mit einer 4 kg Rolle 10-fach überrollt (fünfmal hin und zurück). Nach 48 h Aufziehzeit werden die 20 Streifen am Anfasser manuell im

 a) 90°-Winkel gegenüber der Verklebungsebene oder alternativ

 b) im 0°-Winkel (d.h. in der Verklebungsebene)

aus der Klebfuge gestrippt.

Es wird bewertet, wie viele der 20 Muster beim Strippen im gewählten Winkel reißen, wobei die Angabe in % erfolgt.

*Querschlagzähigkeit (DuPont-Test in der x,y-Ebene)*

Aus dem zu untersuchenden Haftklebestreifen wurde eine quadratische, rahmenförmige Probe ausgeschnitten (Außenmaße 33 mm x 33 mm; Stegbreite 2,0 mm; Innenmaße (Fensterausschnitt) 29 mm x 29 mm). Diese Probe wurde auf einen PC-Rahmen (Außenmaße 45 mm x 45 mm; Stegbreite 10 mm; Innenmaße (Fensterausschnitt) 25 mm x 25 mm; Dicke 3 mm) geklebt. Auf der anderen Seite des Haftklebestreifens wurde ein PC-Fenster von 35 mm x 35 mm geklebt. Die Verklebung von PC-Rahmen, Klebebandrahmen und PC-Fenster erfolgte derart, dass die geometrischen Zentren und die Diagonalen jeweils übereinanderlagen (Eck-auf-Eck). Die Verklebungsfläche betrug 248 mm². Die Verklebung wurde für 5 s mit 248 N gepresst und für 48 Stunden konditioniert bei 23 °C / 50 % relativer Feuchte gelagert.

Unmittelbar nach der Lagerung wurde der Klebeverbund aus PC-Rahmen, Haftklebestreifen und PC-Scheibe mit den überstehenden Kanten des PC-Rahmens derart in eine Probenhalterung gespannt, dass der Verbund senkrecht ausgerichtet war. Die Probenhalterung wurde anschließend in die vorgesehene Aufnahme des "DuPont Impact Tester" zentrisch eingesetzt. Der 300 g schwere Schlagkopf wurde so eingesetzt, dass die rechteckförmige Aufschlaggeometrie mit den Maßen von 20 mm x 3 mm auf die nach oben gerichtete Stirnseite des PC-Fensters zentrisch und bündig auflag.

Auf den so angeordneten Verbund aus Probenhalterung, Probe und Schlagkopf wurde senkrecht ein an zwei Führungsstangen geführtes Gewicht mit einer Masse von 150 g aus einer Höhe von 3 cm fallengelassen (Messbedingungen 23 °C, 50 % relative Feuchte). Die Höhe des Fallgewichtes wurde in 3 cm Schritten so lange erhöht, bis die eingebrachte Stoßenergie die Probe durch die Querschlagbelastung zerstört und das PC-Fenster sich vom PC-Rahmen löste.

Um Versuche mit unterschiedlichen Proben vergleichen zu können, wurde die Energie wie folgt berechnet:

$$E \text{ [J]} = \text{Höhe [m]} \cdot \text{Masse Gewicht [kg]} \cdot 9{,}81 \text{ kg/m} \cdot \text{s}^2$$

Es wurden fünf Proben pro Produkt getestet und der Energiemittelwert als Kennzahl für die Querschlagzähigkeit angegeben.

*Durchschlagzähigkeit (DuPont-Test in der z-Ebene)*

Aus dem zu untersuchenden Haftklebstreifen wurde eine quadratische, rahmenförmige Probe ausgeschnitten (Außenmaße 33 mm x 33 mm; Stegbreite 2,0 mm; Innenmaße (Fensterausschnitt) 29 mm x 29 mm). Diese Probe wurde auf einen Polycarbonat-(PC)-Rahmen (Außenmaße 45 mm x 45 mm; Stegbreite 10 mm; Innenmaße (Fensterausschnitt) 25 mm x 25 mm; Dicke 3 mm) geklebt. Auf der anderen Seite des Haftklebstreifens wurde ein PC-Fenster von 35 mm x 35 mm geklebt. Die Verklebung von PC-Rahmen, Klebebandrahmen und PC-Fenster erfolgte derart, dass die geometrischen Zentren und die Diagonalen jeweils übereinanderlagen (Eck-auf-Eck). Die Verklebungsfläche betrug 248 mm². Die Verklebung wurde für 5 s mit 248 N gepresst und für 48 Stunden konditioniert bei 23 °C / 50 % relativer Feuchte gelagert.

Unmittelbar nach der Lagerung wurde der Klebeverbund aus PC-Rahmen, Haftklebestreifen und PC-Fenster mit den überstehenden Kanten des PC-Rahmens derart in eine Probenhalterung gespannt, dass der Verbund waagerecht ausgerichtet war. Dabei liegt der PC-Rahmen an den überstehenden Kanten auf der Probenhalterung plan auf, so dass das PC-Fenster unterhalb des PC-Rahmens frei schwebend (durch das Klebebandmuster gehalten) vorlag. Die Probenhalterung wurde anschließend in die vorgesehene Aufnahme des "DuPont Impact Tester" zentrisch eingesetzt. Der 150 g schwere Schlagkopf wurde so eingesetzt, dass die kreisförmige Aufschlaggeometrie mit dem Durchmesser 24 mm auf die von oben frei zugängliche Fläche des PC-Fensters zentrisch und bündig auflag.

Auf den so angeordneten Verbund aus Probenhalterung, Probe und Schlagkopf wurde senkrecht ein an zwei Führungsstangen geführtes Gewicht mit einer Masse von 150 g aus einer Höhe von 5 cm fallengelassen (Messbedingungen 23 °C, 50 % relative Feuchte). Die Höhe des Fallgewichtes wurde in 5 cm Schritten so lange erhöht, bis die eingebrachte Stoßenergie die Probe durch die Durchschlagbelastung zerstört und das PC-Fenster sich vom PC-Rahmen löste.

Um Versuche mit unterschiedlichen Proben vergleichen zu können, wurde die Energie wie folgt berechnet:

$$E \text{ [J]} = \text{Höhe [m]}*\text{Masse Gewicht [kg]}*9{,}81 \text{ kg/m}*\text{s}^2$$

Es wurden fünf Proben pro Produkt getestet und der Energiemittelwert als Kennzahl für die Durchschlagzähigkeit angegeben.

*Durchmesser*

Die Bestimmung des mittleren Durchmessers der von Mikroballons gebildeten Hohlräume in einer Haftklebemasseschicht erfolgt anhand von Kryobruchkanten des Haftklebestreifens im Rasterelektronenmikroskop (REM) bei 500-facher Vergrößerung. Es wird von den auf REM-Aufnahmen von 5 verschiedenen Kryobruchkanten des Haftklebestreifens zu sehenden Mikroballons der zu untersuchenden Haftklebemasseschicht jeweils grafisch der Durchmesser ermittelt, wobei das arithmetische Mittel aller in den 5 REM-Aufnahmen ermittelten Durchmesser den mittleren Durchmesser der von den Mikroballons gebildeten Hohlräume der Haftklebemasseschicht im Sinne der vorliegenden Anmeldung darstellt. Die Durchmesser der auf den Aufnahmen zu sehenden Mikroballons werden graphisch derart ermittelt, dass aus den REM-Aufnahmen für jeden einzelnen Mikroballon der zu untersuchenden Haftklebemasseschicht dessen maximale Ausdehnung in beliebiger (zweidimensionaler) Richtung entnommen wird und als dessen Durchmesser angesehen wird.

*Glasübergangstemperatur ($T_g$)*

Glasübergangspunkte - synonym als Glasübergangstemperaturen bezeichnet - werden angegeben als Ergebnis von Messungen mittels Dynamischer Differenzkalorimetrie DDK (englisch Dynamic Scanning Calorimetry; DSC) gemäß der DIN 53 765; insbesondere Abschnitte 7.1 und 8.1, jedoch mit einheitlichen Heiz- und Kühlraten von 10 K/min in allen Heiz- und Kühlschritten (vergleiche DIN 53 765; Abschnitt 7.1; Anmerkung 1). Die Probeneinwaage beträgt 20 mg.

*DACP*

In ein trockenes Probenglas werden 5,0 g Testsubstanz (das zu untersuchende Klebharzmuster) eingewogen und mit 5,0 g Xylol (Isomerengemisch, CAS [1330-20-7], $\geq$ 98,5%, Sigma-Aldrich #320579 oder vergleichbar) versetzt. Bei 130 °C wird die Testsubstanz gelöst und sodann auf 80 °C abgekühlt. Etwaig entwichenes Xylol wird durch weiteres Xylol aufgefüllt, so dass wieder 5,0 g Xylol vorhanden sind. Anschließend werden 5,0 g Diacetonalkohol (4-Hydroxy-4-methyl-2-pentanon, CAS [123-42-2], 99%, Aldrich #H41544 oder vergleichbar) zugegeben. Das Probenglas wird geschüttelt, bis sich die Testsubstanz komplett aufgelöst hat. Hierzu wird die Lösung auf 100 °C aufgeheizt. Das Probenglas mit der Harzlösung wird anschließend in ein Trübungspunktmessgerät Chemotronic Cool der Fa. Novomatics eingebracht und dort auf 110 °C temperiert. Mit einer Kühlrate von 1,0 K/min wird abgekühlt. Der Trübungspunkt wird optisch detektiert. Dazu wird diejenige Temperatur registriert, bei der die Trübung der Lösung 70 % beträgt. Das Ergebnis wird in °C angegeben. Je geringer der DACP-Wert desto höher ist die Polarität der Testsubstanz.

*Dichte*

Die Dichte von ungeschäumten und geschäumten Klebemasseschichten wird ermittelt durch Quotientenbildung aus Masseauftrag und Dicke der auf einen Träger aufgetragenen Klebemassenschicht.

Der Masseauftrag kann durch Bestimmung der Masse eines bezüglich seiner Länge und seiner Breite definierten Abschnitts einer solchen auf einen Träger aufgetragenen Klebemassenschicht bestimmt werden, abzüglich der (bekannten oder separat ermittelbaren) Masse eines Abschnitts gleicher Dimensionen des verwendeten Trägers. Die Dicke einer Klebemasseschicht kann durch Bestimmung der Dicke eines bezüglich seiner Länge und seiner Breite definierten Abschnitts einer solchen auf einen Träger aufgetragenen Klebemassenschicht bestimmt werden, abzüglich der (bekannten oder separat ermittelbaren) Dicke eines Abschnitts gleicher Dimensionen des verwendeten Trägers. Die Dicke der Klebemasseschicht lässt sich über handelsübliche Dickenmessgeräte (Taster-Prüfgeräte) mit Genauigkeiten von

weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

*Masseauftrag*

Der Masseauftrag einer Haftklebmassenschicht in g/m² kann durch Bestimmung der Masse eines bezüglich seiner Länge und seiner Breite definierten Abschnitts einer solchen auf einen Träger aufgetragenen Klebemassenschicht bestimmt werden, abzüglich der (bekannten oder separat ermittelbaren) Masse eines Abschnitts gleicher Dimensionen des verwendeten Trägers.

*Dicke*

Wie bereits die Dicke einer Klebemasseschicht lässt sich auch die Dicke eines Haftklebestreifens bzw. eines Trägers über handelsübliche Dickenmessgeräte (Taster-Prüfgeräte) mit Genauigkeiten von weniger als 1 μm Abweichung ermitteln. Sofern Dickenschwankungen festgestellt werden, wird der Mittelwert von Messungen an mindestens drei repräsentativen Stellen angegeben, also insbesondere nicht gemessen an Kniffen, Falten, Stippen und dergleichen.

*180 ° Klebkrafttest*

Die Prüfung der Schälfestigkeit (Klebkraft) erfolgt in Anlehnung an PSTC-1.

Ein 0,5 cm breiter Streifen eines Klebebandes, bestehend aus (i) einer 23 μm dicken mit Trichloressigsäure geätzten PET-Folie und (ii) einem darauf aufgebrachten Haftklebstreifen in Form eines doppelseitigen Klebeband wie in der vorliegenden Anmeldung beschrieben, wird auf dem Prüfuntergrund in Form einer ASTM-Stahlplatte, deren Oberfläche vorher mit Aceton gereinigt wurde, durch fünfmaliges doppeltes Überrollen mittels einer 4 kg Rolle verklebt. Die Platte wird eingespannt und das Klebeband über sein freies Ende an einer Zugprüfmaschine mit einer Geschwindigkeit von 300 mm/min und in einem Schälwinkel von 180 ° von der Platte abgezogen, wobei die dafür notwendige Kraft ermittelt wird. Die Messergebnisse sind in N/cm angegeben (d.h. normiert auf die Breite des Klebebands) und sind gemittelt aus drei Messungen.

*Feststoffgehalt*

Der Feststoffgehalt ist ein Maß für den Anteil an nicht verdampfbaren Bestandteilen in einer Haftklebemasse. Er wird gravimetrisch bestimmt, indem man die Haftklebmasse einwiegt, dann für 2 Stunden bei 120 °C im Trockenschrank die verdampfbaren Anteile abdampft und den Rückstand zurückwiegt.

**Patentansprüche**

1. Haftklebestreifen umfassend einen Träger und eine Haftklebemassenschicht HS1, die auf einer der Oberflächen des Trägers angeordnet ist, wobei

   (i) der Träger in der Längsrichtung und/oder der Querrichtung, insbesondere in der Längsrichtung und der Querrichtung, eine Reißdehnung von mindestens 250 % aufweist, wie gemäß dem Prüfmethodenteil der Beschreibung bestimmt, und
   (ii) die Haftklebemassenschicht HS1 aus einer Haftklebemasse besteht, die als Basispolymer mindestens einen festen Acrylnitril-Butadien-Kautschuk enthält und ferner mindestens ein Klebharz enthält, wobei der Anteil an Klebharz bei insgesamt 30 bis 130 phr liegt.

2. Haftklebestreifen nach Anspruch 1, **dadurch gekennzeichnet, dass** auf der der Haftklebemassenschicht HS1 gegenüberliegenden Oberfläche des Trägers eine Haftklebemassenschicht HS2 angeordnet ist.

3. Haftklebestreifen nach Anspruch 2, **dadurch gekennzeichnet, dass** die Haftklebemassenschicht HS2 ebenfalls aus einer Haftklebemasse besteht, die als Basispolymer mindestens einen festen Acrylnitril-Butadien-Kautschuk enthält und ferner mindestens ein Klebharz enthält, wobei der Anteil an Klebharz bei insgesamt 30 bis 130 phr liegt.

4. Haftklebestreifen nach einem der vorhergehenden Ansprüche, **dadurch gekennzeichnet, dass** der Acrylnitrilgehalt in dem festen Acrylnitril-Butadien-Kautschuk der Haftklebemassenschicht HS1 und/oder HS2 zwischen 10 und 45 Gew.-% liegt, vorzugsweise zwischen 10 und 30 Gew.-%, bevorzugter zwischen 10 und 25 Gew.-%, und insbesondere zwischen 15 und 20 Gew.-%.

5. Haftklebestreifen nach einem der vorhergehenden Ansprüche, **dadurch gekennzeichnet, dass** in der Haftklebemasse auf Basis von festem Acrylnitril-Butadien-Kautschuk der Haftklebemassenschicht HS1 und/oder HS2 als weiteres Basispolymer mindestens ein flüssiger Acrylnitril-Butadien-Kautschuk enthalten ist, wobei der Acrylnitrilgehalt in dem mindestens einen flüssigen Acrylnitril-Butadien-Kautschuk vorzugsweise zwischen 10 und 45 Gew.-% liegt, bevorzugter zwischen 10 und 30 Gew.-%, noch bevorzugter zwischen 10 und 25 Gew.-%, und insbesondere zwischen 15 und 20 Gew.-%.

6. Haftklebestreifen nach einem der vorhergehenden Ansprüche, **dadurch gekennzeichnet, dass** in der Haftklebemasse auf Basis von festem Acrylnitril-Butadien-Kautschuk der Haftklebemassenschicht HS1 und/oder HS2 ein Blend von mindestens drei synthetischen Nitrilkautschuken S1, S2 und S3 enthalten ist, wobei

   (a) der Blend mikrophasensepariert ist, **gekennzeichnet durch** mindestens drei unterschiedliche Glasübergangstemperaturen im DSC, wie gemäß dem Prüfmethodenteil der Beschreibung bestimmt,
   (b) mindestens eine Glasübergangstemperatur größer als 10 °C ist und eine Glasübergangstemperatur kleiner als -20 °C ist,
   (c) der oder die Nitrilkautschuke S1 einen Acrylnitrilanteil von größer/gleich 35 Gew.-% aufweisen,
   (d) der oder die Nitrilkautschuke S2 einen Acrylnitrilanteil von größer 25 Gew.-% und kleiner 35 Gew.-% aufweisen, und
   (e) der oder die Nitrilkautschuke S3 einen Acrylnitrilanteil von kleiner/gleich 25 Gew.-% aufweisen.

7. Haftklebestreifen nach einem der vorhergehenden Ansprüche, **dadurch gekennzeichnet, dass** in der Haftklebemasse auf Basis von festem Acrylnitril-Butadien-Kautschuk der Haftklebemassenschicht HS1 und/oder HS2 der Anteil an Klebharz bei insgesamt 40 bis 120 phr, vorzugsweise bei insgesamt 50 bis 110 phr und insbesondere bei insgesamt 60 bis 100 phr liegt.

8. Haftklebestreifen nach einem der vorhergehenden Ansprüche, **dadurch gekennzeichnet, dass** in der Haftklebemasse auf Basis von festem Acrylnitril-Butadien-Kautschuk der Haftklebemassenschicht HS1 und/oder HS2 als Klebharz Terpenphenolharz und/oder Polyterpen eingesetzt wird, vorzugsweise Terpenphenolharz.

9. Haftklebestreifen nach einem der Ansprüche 2 bis 8, **dadurch gekennzeichnet, dass** die Haftklebemassenschichten HS1 und HS2 eine identische Zusammensetzung aufweisen.

10. Haftklebestreifen nach einem der Ansprüche 2 oder 4 bis 8, **dadurch gekennzeichnet, dass** auf der der Haftklebemassenschicht HS1 gegenüberliegenden Oberfläche des Trägers eine Haftklebemassenschicht HS2 angeordnet ist, die aus einer Haftklebemasse besteht, deren Basispolymer ausschließlich aus Polymer besteht, das von Acrylnitril-Butadien-Kautschuk verschieden ist, wobei die Haftklebemasse als Basispolymer vorzugsweise mindestens ein Vinylaromatenblockcopolymer enthält.

11. Haftklebestreifen nach Anspruch 10, **dadurch gekennzeichnet, dass** in der Haftklebemasse der Haftklebemassenschicht HS2 das Basispolymer ausschließlich aus Vinylaromatenblockcopolymer besteht, wobei vorzugsweise neben dem Vinylaromatenblockcopolymer kein weiteres Polymer in der Haftklebemasse vorhanden ist.

12. Haftklebestreifen nach Anspruch 10 oder 11, **dadurch gekennzeichnet, dass** in der Haftklebemasse der Haftklebemassenschicht HS2 ferner mindestens ein Klebharz enthalten ist.

13. Haftklebestreifen nach einem der vorhergehenden Ansprüche, **dadurch gekennzeichnet, dass** die Haftklebemassenschichten HS1 und/oder HS2 außenliegende Haftklebemassenschichten sind.

14. Haftklebestreifen nach einem der vorhergehenden Ansprüche, **dadurch gekennzeichnet, dass** die Haftklebemasseschicht HS1 und/oder HS2 eine Dicke von 10 bis 200 $\mu$m, wie zum Beispiel von 20 bis 50 $\mu$m aufweist.

15. Haftklebestreifen nach einem der vorhergehenden Ansprüche, **dadurch gekennzeichnet, dass** der Träger in der Längsrichtung und/oder der Querrichtung, insbesondere in der Längsrichtung und der Querrichtung, eine Reißdehnung von mindestens 300 %, vorzugsweise von mindestens 400 % und insbesondere von mindestens 500 % wie zum Beispiel von mindestens 600 % aufweist, jeweils wie gemäß dem Prüfmethodenteil der Beschreibung bestimmt.

**16.** Haftklebestreifen nach einem der vorhergehenden Ansprüche, **dadurch gekennzeichnet, dass** der Träger in der Längsrichtung und/oder der Querrichtung, insbesondere in der Längsrichtung und der Querrichtung, ein Rückstellvermögen von über 50 % aufweist, vorzugsweise von über 70 % und insbesondere von über 80 %, jeweils wie gemäß dem Prüfmethodenteil der Beschreibung bestimmt.

**17.** Haftklebestreifen nach einem der vorhergehenden Ansprüche, **dadurch gekennzeichnet, dass** der Träger in der Längsrichtung und/oder der Querrichtung, insbesondere in der Längsrichtung und der Querrichtung, eine Spannung bei 50 % Dehnung von kleiner als 20 N/mm$^2$ aufweist, bevorzugt von kleiner als 10 N/mm$^2$, jeweils wie gemäß dem Prüfmethodenteil der Beschreibung bestimmt.

**18.** Haftklebestreifen nach einem der vorhergehenden Ansprüche, **dadurch gekennzeichnet, dass** der Träger mindestens eine Schicht aufweist, die aus Polyurethan besteht, wobei es sich bei dem Polyurethan vorzugsweise um Polyetherurethan oder Polyesterurethan handelt.

**19.** Haftklebestreifen nach einem der vorhergehenden Ansprüche, **dadurch gekennzeichnet, dass** der Träger nur aus einer einzigen Schicht besteht.

**20.** Haftklebestreifen nach einem der vorhergehenden Ansprüche, **dadurch gekennzeichnet, dass** der Träger 10 bis 200 $\mu$m, bevorzugter von 20 bis 150 $\mu$m, und insbesondere 50 bis 100 $\mu$m dick ist.

**Claims**

**1.** Pressure-sensitive adhesive strip comprising a carrier and a layer HS1 of pressure-sensitive adhesive that is disposed on one of the surfaces of the carrier, where

(i) the carrier in the longitudinal direction and/or the transverse direction, more particularly in the longitudinal direction and the transverse direction, has an elongation at break of at least 250%, as determined according to the Test methods section of the description, and

(ii) the layer HS1 of pressure-sensitive adhesive consists of a pressure-sensitive adhesive which comprises as base polymer at least one solid acrylonitrile-butadiene rubber and further comprises at least one tackifier resin, with the fraction of tackifier resin totalling 30 to 130 phr.

**2.** Pressure-sensitive adhesive strip according to Claim 1, **characterized in that** disposed on the surface of the carrier opposite the layer HS1 of pressure-sensitive adhesive is a layer HS2 of pressure-sensitive adhesive.

**3.** Pressure-sensitive adhesive strip according to Claim 2, **characterized in that** the layer HS2 of pressure-sensitive adhesive likewise consists of a pressure-sensitive adhesive which comprises as base polymer at least one solid acrylonitrile-butadiene rubber and further comprises at least one tackifier resin, with the fraction of tackifier resin totalling 30 to 130 phr.

**4.** Pressure-sensitive adhesive strip according to any of the preceding claims, **characterized in that** the acrylonitrile content in the solid acrylonitrile-butadiene rubber of the layer HS1 and/or HS2 of pressure-sensitive adhesive is between 10 and 45 wt%, preferably between 10 and 30 wt%, more preferably between 10 and 25 wt%, and more particularly between 15 and 20 wt%.

**5.** Pressure-sensitive adhesive strip according to any of the preceding claims, **characterized in that** the pressure-sensitive adhesive based on solid acrylonitrile-butadiene rubber of the layer HS1 and/or HS2 of pressure-sensitive adhesive comprises as further base polymer at least one liquid acrylonitrile-butadiene rubber, with the acrylonitrile content in the at least one liquid acrylonitrile-butadiene rubber being preferably between 10 and 45 wt%, more preferably between 10 and 30 wt%, more preferably still between 10 and 25 wt%, and more particularly between 15 and 20 wt%.

**6.** Pressure-sensitive adhesive strip according to any of the preceding claims, **characterized in that** the pressure-sensitive adhesive based on solid acrylonitrile-butadiene rubber of the layer HS1 and/or HS2 of pressure-sensitive adhesive comprises a blend of at least three synthetic nitrile rubbers S1, S2 and S3, where

(a) the blend is microphase-separated, **characterized by** at least three different glass transition temperatures in the DSC, as determined according to the Test methods section of the description,

(b) at least one glass transition temperature is greater than 10°C and one glass transition temperature is less than -20°C,

(c) the nitrile rubber or rubbers S1 has/have an acrylonitrile fraction of greater than or equal to 35 wt%,

(d) the nitrile rubber or rubbers S2 has/have an acrylonitrile fraction of greater than 25 wt% and less than 35 wt%, and

(e) the nitrile rubber or rubbers S3 has/have an acrylonitrile fraction of less than or equal to 25 wt%.

7. Pressure-sensitive adhesive strip according to any of the preceding claims, **characterized in that** in the pressure-sensitive adhesive based on solid acrylonitrile-butadiene rubber of the layer HS1 and/or HS2 of pressure-sensitive adhesive, the fraction of tackifier resin totals 40 to 120 phr, preferably 50 to 110 phr, and more particularly 60 to 100 phr.

8. Pressure-sensitive adhesive strip according to any of the preceding claims, **characterized in that** in the pressure-sensitive adhesive based on solid acrylonitrile-butadiene rubber of the layer HS1 and/or HS2 of pressure-sensitive adhesive, the tackifier resin used comprises terpene-phenolic resin and/or polyterpene, preferably terpene-phenolic resin.

9. Pressure-sensitive adhesive strip according to any of Claims 2 to 8, **characterized in that** the layers HS1 and HS2 of pressure-sensitive adhesive have an identical composition.

10. Pressure-sensitive adhesive strip according to any of Claims 2 or 4 to 8, **characterized in that** disposed on the surface of the carrier opposite the layer HS1 of pressure-sensitive adhesive is a layer HS2 of pressure-sensitive adhesive which consists of a pressure-sensitive adhesive whose base polymer consists exclusively of polymer which is different from acrylonitrile-butadiene rubber, with the pressure-sensitive adhesive comprising as base polymer preferably at least one vinylaromatic block copolymer.

11. Pressure-sensitive adhesive strip according to Claim 10, **characterized in that** in the pressure-sensitive adhesive of the layer HS2 of pressure-sensitive adhesive, the base polymer consists exclusively of vinylaromatic block copolymer, with preferably no polymer other than the vinylaromatic block copolymer being present in the pressure-sensitive adhesive.

12. Pressure-sensitive adhesive strip according to Claim 10 or 11, **characterized in that** the pressure-sensitive adhesive of the layer HS2 of pressure-sensitive adhesive further comprises at least one tackifier resin.

13. Pressure-sensitive adhesive strip according to any of the preceding claims, **characterized in that** the layers HS1 and/or HS2 of pressure-sensitive adhesive are outer layers of pressure-sensitive adhesive.

14. Pressure-sensitive adhesive strip according to any of the preceding claims, **characterized in that** the layer HS1 and/or HS2 of pressure-sensitive adhesive has a thickness of 10 to 200 $\mu$m, such as, for example, of 20 to 50 $\mu$m.

15. Pressure-sensitive adhesive strip according to any of the preceding claims, **characterized in that** the carrier in the longitudinal direction and/or the transverse direction, more particularly in the longitudinal direction and the transverse direction, has an elongation at break of at least 300%, preferably of at least 400%, and more particularly of at least 500%, such as, for example, of at least 600%, in each case as determined according to the Test methods section of the description.

16. Pressure-sensitive adhesive strip according to any of the preceding claims, **characterized in that** the carrier in the longitudinal direction and/or the transverse direction, more particularly in the longitudinal direction and the transverse direction, has a resilience of above 50%, preferably of above 70%, and more particularly of above 80%, in each case as determined according to the Test methods section of the description.

17. Pressure-sensitive adhesive strip according to any of the preceding claims, **characterized in that** the carrier in the longitudinal direction and/or the transverse direction, more particularly in the longitudinal direction and the transverse direction, has a 50% elongation stress of less than 20 N/mm$^2$, preferably of less than 10 N/mm$^2$, in each case as determined according to the Test methods section of the description.

18. Pressure-sensitive adhesive strip according to any of the preceding claims, **characterized in that** the carrier has at least one layer which consists of polyurethane, with the polyurethane preferably being polyether urethane or polyester urethane.

**19.** Pressure-sensitive adhesive strip according to any of the preceding claims, **characterized in that** the carrier consists only of a single layer.

**20.** Pressure-sensitive adhesive strip according to any of the preceding claims, **characterized in that** the carrier is 10 to 200 $\mu$m, more preferably from 20 to 150 $\mu$m, and more particularly 50 to 100 $\mu$m thick.

## Revendications

**1.** Bande adhésive de contact comprenant un support et une couche de masse adhésive de contact HS1, qui est agencée sur une des surfaces du support,

> (i) le support présentant dans la direction longitudinale et/ou dans la direction transversale, notamment dans la direction longitudinale et dans la direction transversale, une élongation à la rupture d'au moins 250 %, telle que déterminée selon la partie méthodes d'essais de la description, et
> (ii) la couche de masse adhésive de contact HS1 étant constituée d'une masse adhésive de contact, qui contient en tant que polymère de base au moins un caoutchouc d'acrylonitrile-butadiène solide, et contient en outre au moins une résine adhésive, la proportion de résine adhésive étant au total de 30 à 130 pce.

**2.** Bande adhésive de contact selon la revendication 1, **caractérisée en ce qu'**une couche de masse adhésive de contact HS2 est agencée sur la surface du support opposée à la couche de masse adhésive de contact HS1.

**3.** Bande adhésive de contact selon la revendication 2, **caractérisée en ce que** la couche de masse adhésive de contact HS2 est également constituée d'une masse adhésive de contact, qui contient en tant que polymère de base au moins un caoutchouc d'acrylonitrile-butadiène solide, et contient en outre au moins une résine adhésive, la proportion de résine adhésive étant au total de 30 à 130 pce.

**4.** Bande adhésive de contact selon l'une quelconque des revendications précédentes, **caractérisée en ce que** la teneur en acrylonitrile du caoutchouc d'acrylonitrile-butadiène solide de la couche de masse adhésive de contact HS1 et/ou HS2 est comprise entre 10 et 45 % en poids, avantageusement entre 10 et 30 % en poids, de manière davantage préférée entre 10 et 25 % en poids, et notamment entre 15 et 20 % en poids.

**5.** Bande adhésive de contact selon l'une quelconque des revendications précédentes, **caractérisée en ce qu'**au moins un caoutchouc d'acrylonitrile-butadiène liquide est contenu en tant que polymère de base supplémentaire dans la masse adhésive de contact à base de caoutchouc d'acrylonitrile-butadiène solide de la couche de masse adhésive de contact HS1 et/ou HS2, la teneur en acrylonitrile de l'au moins un caoutchouc d'acrylonitrile-butadiène liquide étant avantageusement comprise entre 10 et 45 % en poids, de manière davantage préférée entre 10 et 30 % en poids, de manière encore davantage préférée entre 10 et 25 % en poids, et notamment entre 15 et 20 % en poids.

**6.** Bande adhésive de contact selon l'une quelconque des revendications précédentes, **caractérisée en ce qu'**un mélange homogène d'au moins trois caoutchoucs de nitrile synthétiques S1, S2 et S3 est contenu dans la masse adhésive de contact à base de caoutchouc d'acrylonitrile-butadiène solide de la couche de masse adhésive de contact HS1 et/ou HS2,

> (a) le mélange homogène étant séparé en microphases, **caractérisées par** au moins trois températures de transition vitreuse différentes en DSC, telles que déterminées selon la partie méthodes d'essais de la description,
> (b) au moins une température de transition vitreuse étant supérieure à 10 °C et une température de transition vitreuse étant inférieure à -20 °C,
> (c) le ou les caoutchoucs de nitrile S1 présentant une proportion d'acrylonitrile supérieure ou égale à 35 % en poids,
> (d) le ou les caoutchoucs de nitrile S2 présentant une proportion d'acrylonitrile supérieure à 25 % en poids et inférieure à 35 % en poids, et
> (e) le ou les caoutchoucs de nitrile S3 présentant une proportion d'acrylonitrile inférieure ou égale à 25 % en poids.

**7.** Bande adhésive de contact selon l'une quelconque des revendications précédentes, **caractérisée en ce que** la proportion de résine adhésive dans la masse adhésive de contact à base de caoutchouc d'acrylonitrile-butadiène solide de la couche de masse adhésive de contact HS1 et/ou HS2 est au total de 40 à 120 pce, avantageusement au total de 50 à 110 pce et notamment au total de 60 à 100 pce.

8. Bande adhésive de contact selon l'une quelconque des revendications précédentes, **caractérisée en ce qu'**une résine de terpène-phénol et/ou un polyterpène sont utilisés en tant que résine adhésive dans la masse adhésive de contact à base de caoutchouc d'acrylonitrile-butadiène solide de la couche de masse adhésive de contact HS1 et/ou HS2, avantageusement une résine de terpène-phénol.

9. Bande adhésive de contact selon l'une quelconque des revendications 2 à 8, **caractérisée en ce que** les couches de masse adhésive de contact HS1 et HS2 présentent une composition identique.

10. Bande adhésive de contact selon l'une quelconque des revendications 2 ou 4 à 8, **caractérisée en ce qu'**une couche de masse adhésive de contact HS2 est agencée sur la surface du support opposée à la couche de masse adhésive de contact HS1, qui est constituée d'une masse adhésive de contact dont le polymère de base est exclusivement constitué d'un polymère qui est différent d'un caoutchouc d'acrylonitrile-butadiène, la masse adhésive de contact contenant avantageusement au moins un copolymère séquencé de composé aromatique de vinyle en tant que polymère de base.

11. Bande adhésive de contact selon la revendication 10, **caractérisée en ce que** le polymère de base dans la masse adhésive de contact de la couche de masse adhésive de contact HS2 est exclusivement constitué de copolymère séquencé de composé aromatique de vinyle, aucun polymère supplémentaire n'étant avantageusement présent en plus du copolymère séquencé de composé aromatique de vinyle dans la masse adhésive de contact.

12. Bande adhésive de contact selon la revendication 10 ou 11, **caractérisée en ce qu'**au moins une résine adhésive est en outre contenue dans la masse adhésive de contact de la couche de masse adhésive de contact HS2.

13. Bande adhésive de contact selon l'une quelconque des revendications précédentes, **caractérisée en ce que** les couches de masse adhésive de contact HS1 et/ou HS2 sont des couches de masses adhésives de contact extérieures.

14. Bande adhésive de contact selon l'une quelconque des revendications précédentes, **caractérisée en ce que** la couche de masse adhésive de contact HS1 et/ou HS2 présente une épaisseur de 10 à 200 $\mu$m, tel que par exemple de 20 à 50 $\mu$m.

15. Bande adhésive de contact selon l'une quelconque des revendications précédentes, **caractérisée en ce que** le support présente dans la direction longitudinale et/ou dans la direction transversale, notamment dans la direction longitudinale et dans la direction transversale, une élongation à la rupture d'au moins 300 %, avantageusement d'au moins 400 % et notamment d'au moins 500 %, tel que par exemple d'au moins 600 %, à chaque fois telle que déterminée selon la partie méthodes d'essais de la description.

16. Bande adhésive de contact selon l'une quelconque des revendications précédentes, **caractérisée en ce que** le support présente dans la direction longitudinale et/ou dans la direction transversale, notamment dans la direction longitudinale et dans la direction transversale, une résilience de plus de 50 %, avantageusement de plus de 70 % et notamment de plus de 80 %, à chaque fois telle que déterminée selon la partie méthodes d'essais de la description

17. Bande adhésive de contact selon l'une quelconque des revendications précédentes, **caractérisée en ce que** le support présente dans la direction longitudinale et/ou dans la direction transversale, notamment dans la direction longitudinale et dans la direction transversale, une tension à 50 % d'élongation inférieure à 20 N/mm$^2$, de préférence inférieure à 10 N/mm$^2$, à chaque fois telle que déterminée selon la partie méthodes d'essais de la description.

18. Bande adhésive de contact selon l'une quelconque des revendications précédentes, **caractérisée en ce que** le support comprend au moins une couche qui est constituée de polyuréthane, le polyuréthane consistant avantageusement en du polyéther-uréthane ou du polyester-uréthane.

19. Bande adhésive de contact selon l'une quelconque des revendications précédentes, **caractérisée en ce que** le support n'est constitué que d'une couche unique.

20. Bande adhésive de contact selon l'une quelconque des revendications précédentes, **caractérisée en ce que** le support est d'une épaisseur de 10 à 200 µm, de manière davantage préférée de 20 à 150 µm, et notamment de 50 à 100 µm.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4024312 A
- DE 3331016 C2
- WO 9211332 A1
- WO 9211333 A1
- DE 4222849 C1
- WO 9506691 A1
- DE 19531696 A1
- DE 19626870 A1
- DE 19649727 A1
- DE 19649728 A1
- DE 19649729 A1
- DE 19708364 A1
- DE 19720145 A1
- DE 19820858 A1
- WO 9937729 A1
- DE 10003318 A1
- DE 4233872 C1
- DE 19511288 C1
- US 5507464 B1
- US 5672402 B1
- WO 9421157 A1
- DE 4428587 C1
- DE 4431914 C1
- WO 9707172 A1
- DE 19627400 A1
- WO 9803601 A1
- DE 19649636 A1
- DE 19720526 A1
- DE 19723177 A1
- DE 19723198 A1
- DE 19726375 A1
- DE 19756084 C1
- DE 19756816 A1
- DE 19842864 A1
- DE 19842865 A1
- WO 9931193 A1
- WO 9963018 A1
- WO 0012644 A1
- DE 19938693 A1
- WO 2010141248 A1
- EP 0257984 A1
- DE 3537433 A1
- WO 9531225 A1
- EP 0693097 A1
- WO 9818878 A1
- US 4885170 A
- EP 1102809 A
- DE 102015206076 A1
- DE 102012223670 A1
- DE 102015215247 A1
- DE 102014208264 A1
- WO 2011124782 A1
- WO 2009114683 A1
- WO 2010077541 A1
- WO 2010078396 A1
- EP 0894841 B1
- EP 1308492 B1

**In der Beschreibung aufgeführte Nicht-Patentliteratur**

- **DONATAS SATAS.** Handbook of Pressure Sensitive Adhesive Technology. van Nostrand, 1989
- Polymer Handbook. Wiley, 1999